# EUROPEAN PATENT APPLICATION

(11) **EP 4 786 160 A2**
(43) Date of publication of application: **05.08.2026**
(21) Application number: 26181496.6
(22) Date of filing: 26.01.2023
(51) Int. Cl.: B32B 5/26

(54) **NONWOVEN MATERIAL WITH THREE-DIMENSIONAL ACTIVE WICKING AND EVAPORATION**

(30) Priority: 26.01.2022 US 202263303247 P
(62) Divisional of application: 23706203.9
(71) Applicant: Zephyros Inc., Romeo, MI 48065 (US)
(72) Inventor: THOMPSON, Greg, West Columbia, SC, 29170 (US); CHAUT, Christophe, 67129 Molsheim Cedex (FR); ENGEL, Marc, 67129 Molsheim Cedex (FR); MOHAN, Varun, West Columbia, SC, 29170 (US); CZAPLICKI, Michael, Romeo, MI, 48065 (US)
(74) Representative: Kutzenberger Wolff & Partner

(57) **Abstract**

A material having one or more optional permeable facing layers and a body of fibrous absorbing material. The body may include a fibrous lofted nonwoven material. The fibrous absorbing material is adapted to be situated adjacent to a surface having or producing moisture. At least a portion of fibers of the fibrous lofted nonwoven material may have a generally vertical orientation relative to the surface having or producing moisture. The generally vertical orientation may have a general visible trend forming an angle of about 45 degrees to about 135 degrees. The material may be capable of absorbing and/or transferring moisture, permeable, resilient, or a combination thereof.

## Description

### CLAIM OF PRIORITY

This application claims the benefit of U.S. Provisional Application No. 63/303,247, filed on January 26, 2022, the contents of which are hereby, in its entirety, incorporated by reference for all purposes.

### FIELD

The present teachings generally relate to a material for providing cushioning, comfort, and/or moisture wicking and absorption, and more particularly, a material that provides three-dimensional guided wicking and evaporation.

### BACKGROUND

Industries are seeking new ways to provide materials with moisture resistance, breathability, cushioning, or moisture absorption while still having flexibility and physical strength. It is important that the materials are adapted for a variety of applications and allow for easy manufacturing and installation. Moisture wicking and/or cushioning materials have a wide range of applications. In wearable articles, it is important to pull away moisture from a wearer's body to keep the wearer cool and/or dry. It is important for one or more surfaces of the wearable article to be dry to the touch quickly. It is important for the wearer to perceive dryness of the material at a surface, even if the entirety of the material through its thickness is not completely dry.

In protective gear, it is important that the material provides sufficient cushioning, such as in kneepads, elbow pads, shin guards, shoulder pads, helmet liners, other headgear, and the like, while also wicking away moisture and/or being resistant to mold or mildew. It is important to reduce odor of the material or health risks for the wearer.

In consumer products such as wearable items, such as backpacks, clothing, or protective gear, for example, the materials used need to meet moisture resistance, comfortability, and structural requirements or standards. These standards may vary greatly between each industry, and thus require a highly tunable material to meet all of the requirements. For example, the clothing industry may require a moisture wicking material that feels soft when contacting a user's skin. Due to more demanding standards throughout the industries, the materials used need to be robust and adaptable, yet not impose an increased cost to consumers. In addition, it is desirable that certain items, such as clothing, wearable items, and/or protective gear, like kneepads, vests, footwear, and helmet liners, are washable without losing their effectiveness, without losing shape, without losing certain properties, without losing certain performance attributes, or a combination thereof. It is desirable that certain items are capable of undergoing a certain number of wash cycles without losing any of these characteristics beyond a predetermined range.

Typical materials used for providing moisture resistance or moisture absorption include closed cell foams, open cell foams, cross-lapped felts, or materials having a horizontal fiber orientation. However, while these materials may absorb moisture, they often have poor breathability and/or high tortuosity, resulting in the absorbed moisture remaining in the material and close to the user (e.g., at the skin's surface), promoting the growth of fungi or bacteria and causing odor. These materials may be heavy and hot for a wearer, thereby causing and accumulating more sweat. Additionally, these materials tend to have poor resiliency in applications requiring heightened stress on the material. Clothing materials, for example, typically use nylon or polyester alone to provide a sweat wicking material. Sports pads and other wearable items such as backpacks often include foams, such as polyurethane foams and/or ethylene-vinyl acetate (EVA) foams. Wearable materials are often judged to be uncomfortable based on a lack of permeability for fluids (e.g., air, water, sweat, vapor). These materials often provide poor resilience or breathability, making it uncomfortable for users that wear the clothing. These materials are often difficult to clean and may even gain weight over time due to the building up of moisture, mildew, and the like. Additionally, polyurethane foams are typically thermoset materials, which tend to be more brittle under cyclic compression. Therefore, foams may eventually fracture and break down.

It may be attractive to have a material that is resistant to moisture yet also pulls moisture away from a desired surface. It may be attractive to have a material that transfers moisture away from a user. It may be attractive to have a material that transfers moisture through one or more of its layers. It may be attractive to have a material that transfers moisture from one layer to another layer. It may be attractive to have a material that is dry to the touch in a desired period of time. It may also be attractive to have a material that is easy to manufacture; quick drying; structurally resilient; odor repelling; resistant to bacteria, fungi, mold, and/or mildew; or a combination thereof. Therefore, there remains a need for a material that is moisture absorbing and/or moisture wicking. There also remains a need for a material that is antimicrobial, mildew resistant, flexible, breathable, or a combination thereof. There is a need for a product that provides cushioning while providing moisture absorption and wicking properties. There is a need for a material that is breathable. There is a need for a material that provides increased comfort and/or cushioning to the user while withstanding compressive forces of repeated or cyclic use.

### SUMMARY

The present teachings meet one or more of the above needs by the improved devices and methods described herein. The present teachings include a material that may provide cushioning, comfort, the ability to clean, or a combination thereof. The present teachings include a material that provides breathability; energy absorption; structure resiliency; comfortable product feel; moisture wicking; odor control, reduction, or inhibition; cooling effect to the wearer; insulative effect to the wearer; quick drying properties; cleanability and/or washability; durability; capability to be formed into three-dimensional shapes; pressure distribution; or a combination thereof. The present teachings may provide a balance between providing a permeable structure to provide air flow and/or fluid transport through the material and sufficient mechanical integrity that the material is capable of withstanding the intended loads to which it is to be subjected. The present teachings or materials described herein may be used as a replacement for foam, such as polyurethane foams and/or EVA foams. The present teachings or materials may be used in any application where polyurethane foam is used. For example, the present material may be used in wearable items where polyurethane foam is traditionally used.

The present teachings relate to an article having a body of fibrous absorbing material having any of the following features described in the following paragraphs in any combination. The body of the fibrous absorbing material may include a nonwoven material. The body of the fibrous absorbing material may include a fibrous lofted nonwoven material. The body of the fibrous absorbing material may be a fibrous lofted nonwoven material.

At least a portion of the fibers of the body of the fibrous absorbing material may have a generally vertical orientation relative to the surface having or producing moisture. At least a portion of the fibers of the body of the fibrous absorbing material may have a generally vertical orientation opposite the surface having or producing moisture. At least a portion of the fibers of the body of the fibrous absorbing material may have a generally vertical orientation relative to an A-surface of the material. At least a portion of the fibers of the body of the fibrous absorbing material may have a generally vertical orientation relative to a B-surface of the material. For example, in a fibrous absorbing material with facing materials, one facing may be referred to as the A-surface. The A-surface may be the material adapted to be located at or near the wearer (e.g., the wearer's skin). In a fibrous absorbing material with facing materials on opposing sides of the fibrous portion, the material facing away from the user may be referred to as the B-surface.

The fibers having a generally vertical orientation may have a general visible trend (e.g., as seen by the naked eye, with or without dyeing of the fibers) forming an angle of about 45 degrees or greater, about 60 degrees or greater, or about 120 degrees or greater relative to a surface, such as a surface having or producing moisture, a surface adapted to contact the wearer or user, a surface contacting a B-surface material, or a combination thereof. The fibers having a generally vertical orientation may have a general visible trend forming an angle of about 135 degrees or less, about 120 degrees or less, or about 105 degrees or less relative to a surface, such as a surface having or producing moisture, a surface adapted to contact the wearer or user, a surface contacting a B-surface material, or a combination thereof. The angle may be measured about 50% or less into the thickness of the material (e.g., measured from the surface into the thickness direction), about 40% or less, about 30% or less, about 25% or less, about 15% or less, or about 10% or less into the thickness of the material (e.g., as measured from the surface of the fibrous portion, as measured from the facing layer directly adjacent, or both). The angle may be measured when viewing the fibrous lofted nonwoven material from the cross-direction (or when viewing a cross-section of the material in the machine direction). The fibers may have a generally vertical orientation prior to any compression operations.

The lofted nonwoven material may undergo one or more carding operations. The lofted nonwoven material may undergo one or more lapping operations. The lofted nonwoven material may be a carded and lapped material. The lofted nonwoven material may be a vertically lapped material. The lofted nonwoven material may be a rotary lapped material. Rotary lapping may produce a vertically lapped structure. The lofted nonwoven material may be an air laid material. The fibrous absorbing material may be adapted to be situated adjacent to a surface having or producing moisture. Fibers of the lofted nonwoven material may be oriented generally perpendicularly in an uncompressed state to the surface having or producing moisture. The surface having or producing moisture may be skin and/or hair of a body or a garment wetted and/or saturated with moisture. The fibrous absorbing material may have an extended portion that increases the surface area or open surface of the fibrous absorbing material. The extended portion may provide enhanced evaporation to the fibrous absorbing material.

The fibrous absorbing material may be adapted to be located between the surface having or producing moisture and another surface (also referred to herein as an opposing surface). The other surface may be a portion of a wearable article. The other surface may be a rigid shell of a wearable article. The extended portion may extend beyond the surface having or producing moisture. The extended portion may extend beyond the opposing surface. The extended portion may extend beyond both the surface having or producing moisture and the opposing surface. The extended portion may extend beyond only one of the surface having or producing moisture and the opposing surface.

The fibrous absorbing material may include one or more facing materials. A facing material may be a permeable material. The facing material may be permeable to fluids (e.g., air, vapor, or liquid, such as water or perspiration). A facing material may be a moisture wicking material. A facing material may be hydrophilic. A facing material may be hydrophobic. The fibrous absorbing material may include one or more moisture wicking materials. The moisture wicking material may be adapted to contact the surface having or producing moisture. The lofted nonwoven material may be in generally planar contact with a moisture wicking material. The lofted nonwoven material may be sandwiched between two moisture wicking materials.

The fibrous absorbing material may wick moisture away from the surface having or producing moisture in a generally vertical direction (e.g., generally transverse to the surface having or producing moisture). The fibrous absorbing material may wick moisture in a transverse direction (e.g., generally parallel to the surface having or producing moisture). The transverse wicking may wick the moisture toward an extended portion. Evaporation of the moisture absorbed by the fibrous absorbing material may occur in multiple directions or from multiple directions. Three-dimensional active wicking and evaporation may occur at the extended portion. Fluid, such as air or vapor, may be transferred from a surface of the material, such that the article is dry to the touch at the surface having or producing moisture. The surface may be dry to the touch even if the entirety of the fibrous absorbing material has not yet completely dried.

Air may be exchanged within the material. Fluid, such as air or vapor, may be exchanged within the fibrous absorbing material by expelling the fluid from the fibrous absorbing material upon application of a load or upon compressing the material. New fluid may be drawn in upon recovery of the material to its unstressed or uncompressed state. This may create a pumping effect.

The fibrous absorbing material may be adapted for use with a wearable item. The fibrous absorbing material may be adapted for use with an article that straps onto and/or around a portion of the body, such as a backpack or vest (e.g., a ballistics vest). The fibrous absorbing material bay be used at a back contact portion, side panel, strap, waist harness, or any combination thereof of the backpack. The fibrous absorbing material may be positioned at the back contact portion of the backpack, and the extended portion may extend to the side panel of the backpack. The fibrous absorbing material may be used with a sporting pad, such as shoulder pads, shin guards, joint pads or guards, or the like. The fibrous absorbing material may be used with a helmet or article of headwear. The fibrous absorbing material may be worn on or around at least a portion of the head. The extended portion may extend into an opening of the helmet at an edge defining the opening. The fibrous absorbing material may be used with footwear, such as shoes or boots. The fibrous absorbing material may wrap around a portion of an article. For example, the fibrous absorbing material may wrap around an edge of an article, such as an edge of a helmet. The fibrous absorbing material may, for example, wrap around a top edge or collar of an article of footwear. The fibrous absorbing material may be used as a pad for straps or harnesses, such as a pad for luggage, a messenger bag, or shoulder bag straps, or a pad for a harness such as a seat belt or car seat. The fibrous absorbing material may be used as part of other wearable garments.

### BRIEF DESCRIPTION OF THE DRAWINGS

FIG. 1 is an illustration of an exemplary absorption and evaporation process using the material of the present teachings.
FIGS. 2, 3, and 4 illustrate exemplary extended portion of the material in accordance with the present teachings.
FIG. 5 is a side view of an exemplary material in accordance with the present teachings.
FIG. 6 is a photograph of an exemplary material having generally vertically oriented fibers in accordance with the present teachings.
FIG. 7 is an example of a material having generally horizontally oriented fibers.
FIG. 8 is a photograph of an exemplary material having angularly oriented fibers consistent with a generally vertical orientation in accordance with the present teachings.
FIG. 9 is photograph of an exemplary material having angularly oriented fibers consistent with a generally vertical orientation in accordance with the present teachings.
FIG. 10 is an exemplary article, shown as a backpack, using the material in accordance with the present teachings.
FIG. 11 is an exemplary article, shown as a helmet, using the material in accordance with the present teachings.
FIG. 12 is a top view of a portion of an exemplary helmet.
FIGS. 13, 14, and 15 are partial cutaway views of the exemplary helmet of FIG. 12 with arrangements of the material in accordance with the present teachings.
FIG. 16 is an exemplary helmet including the material in accordance with the present teachings.
FIG 17 is an exemplary article using the material of the present teachings wrapping around an edge of the article.
FIG. 18 is an exemplary article, shown as an article of footwear, using the material in accordance with the present teachings.
FIG. 19 is an exemplary article, shown as an article of footwear, using the material in accordance with the present teachings.
FIGS. 20A and 20B illustrate an exemplary article, shown as a garment, using the material in accordance with the present teachings.
FIG. 21 is a graph showing breathability of the samples tested using ASTM D737.
FIG. 22 is a graph showing moisture wicking uptake of samples tested.
FIG. 23 is a graph showing water evaporated versus time for the samples tested, with water absorbed into the bottom of the article.
FIG. 24 is a graph showing water evaporated from the surface of 4 inch by 4 inch samples versus time.
FIG. 25 illustrates a compressed vertical pleat sample in a tray, exposed to convective air flow.
FIG. 26 illustrates a compressed vertical pleat sample in a tray, exposed to convective air flow.
FIG. 27 is a graph showing water evaporated from the surface of compressed vertical pleat samples over time.
FIG. 28 is a graph showing water evaporated from the surface of compressed vertical pleat samples over time when the sample is held vertically.
FIG. 29 is a graph showing the compression force deflection of the samples tested using ASTM D3574 Test C.

### DETAILED DESCRIPTION

The explanations and illustrations presented herein are intended to acquaint others skilled in the art with the teachings, its principles, and its practical application. Those skilled in the art may adapt and apply the teachings in its numerous forms, as may be best suited to the requirements of a particular use. Accordingly, the specific embodiments of the present teachings as set forth are not intended as being exhaustive or limiting of the teachings. The scope of the teachings should, therefore, be determined not with reference to the description herein, but should instead be determined with reference to the appended claims, along with the full scope of equivalents to which such claims are entitled. The disclosures of all articles and references, including patent applications and publications, are incorporated by reference in their entireties for all purposes. Other combinations are also possible as will be gleaned from the following claims, which are also hereby incorporated by reference in their entireties into this written description.

The disclosure of U.S. Publication No. 2020/0315273, directed to a breathable, wicking nonwoven material, and of International Application No. PCT/US2021/043133, directed to a headband or headwear insert, are incorporated by reference in their entireties for all purposes herein.

The present teachings relate to a fibrous absorbing material that wicks and/or absorbs moisture from a surface. Moisture as defined herein may include fluid in liquid form (e.g., water, sweat), vapor (e.g., water vapor), gas form (e.g., air), or a combination thereof.

The fibrous absorbing material may have an extended portion that extends beyond a surface having or producing moisture, another surface, or both. The extended portion may provide increased surface area of the fibrous absorbing material that is exposed to air flow. Increased surface area may encourage or increase the evaporation of moisture within the fibrous absorbing material (e.g., as compared with a fibrous absorbing material without an extended portion, as compared with a polyurethane foam, or both). Increased surface area may increase the moisture holding capacity of the fibrous absorbing material. Increased holding capacity may reduce dripping of moisture from the material, may remove more moisture from the surface (e.g., removing more moisture from the skin of a user, thereby giving a dry feel for the user), or both.

The fibrous absorbing material as described herein may be useful where moisture absorption and/or wicking; moisture evaporation; cushioning; cooling; insulation; the like; or a combination thereof are desired. The fibrous absorbing material may be useful with wearable articles. The fibrous absorbing material may be integrated into the wearable article. The fibrous absorbing material may be separate from the wearable article. The fibrous absorbing material may be received within a portion of the wearable article (e.g., as an insert). The fibrous absorbing material may be the wearable article itself. The fibrous absorbing material may be fastenable to the wearable article. The fibrous absorbing material may be removably attached to the wearable article (e.g., via hook and loop fastener, snaps, clips, or the like). The fibrous absorbing material may be permanently or semi-permanently attached to the wearable item. Semi-permanent attachment may mean that it cannot be removed without destroying the attachment (e.g., stitching the fibrous absorbing material to the wearable item).

The fibrous absorbing material may be used with wearable accessories like bags, such as backpacks, messenger bags, cross-body bags, fanny packs, satchels, tote bags, shoulder bags, sporting bags (e.g., bags for carrying sporting equipment), bags for specific activities (e.g., camera bags, bags for carrying musical instruments, or bags for gear for participating in a particular activity, bags for traveling), running belts, or the like. At least a portion of the accessory may contact a wearer at the back, shoulder, waist, chest, or combination thereof, for example.

The fibrous absorbing material may act as a pad for a strap of a bag, such as a shoulder strap, alone or in combination with other padding materials. The fibrous absorbing material may be integrated into the strap. The fibrous absorbing material may attach to the strap (e.g., via fastener, via one or more openings to receive the strap, via wrapping around the strap and fastening one part of the fibrous absorbing material to another).

The fibrous absorbing material may be useful with safety components or accessories that contact a user. For example, the fibrous absorbing material may be part of a safety harness, such as those used in sports (e.g., rock climbing, hang gliding, skydiving, racing, watersports, or the like), those used for children or vulnerable populations, those used for animals, or the like. The fibrous absorbing material may be useful with safety belts or seat belts. Safety belts or seat belts may be used for vehicle seats, where the vehicle may, for example, include cars, buses, helicopters, airplanes, trains, boats, or other methods of transportation. Safety belts may be used in applications such as theme park rides, amusement attractions, off-road vehicles, all terrain vehicles, the like, or a combination thereof. The fibrous absorbing material may be useful within or as an accessory for a car seat (e.g., as padding in the seat area, as padding in the backrest area, as padding in the headrest area, as padding at the straps at or near the neck of the user, as padding at or near a buckle between the user's legs, or a combination thereof).

The fibrous absorbing material may be useful with wearable articles that provide padding and/or protection to the wearer. For example, the fibrous absorbing material may be part of protective gear, such as head gear, helmets, sporting pads (e.g., shoulder pads for football, lacrosse, hockey; shin guards; elbow pads; knee pads; wrist guards), motorcycle back protectors, cycling back and/or chest protectors, protective vests (e.g., equestrian vests), or the like. The fibrous absorbing material may be used within body armor. Body armor may include vests, such as a ballistic or bulletproof vest. For example, the fibrous absorbing material may be a portion of an absorbing panel of a ballistic vest. The fibrous absorbing material may be used as a padding material for use with protective gear with a rigid shell material. The fibrous absorbing material may be an insert for protective gear or wearable items or accessories. The fibrous absorbing material may be integrated into the protective gear or wearable items or accessories. For example, the fibrous absorbing material may form a portion of a backpack where padding is traditionally located. The fibrous absorbing material may be secured to another portion of protective gear or wearable items or accessories (e.g., secured directly or indirectly to a rigid outer shell such as a helmet or padding for joints or bones, such as shoulders, elbows, knees, shins, or wrists).

The fibrous absorbing material may be useful with wearable articles such as shirts, jackets, pants, tank tops, swimsuits, undergarments (e.g., bra cups, mastectomy bras and/or breast prosthesis, sports bras, underwire bras, push-up bras, bandeau bras, other types of bras, shapewear, padded underwear, absorbent undergarments (e.g., for incontinence, menstrual cycles), and the like), pants, tights, shorts, or the like. The fibrous absorbing material may be selectively positioned in areas where moisture gathers, where cooling is needed, where cushioning is needed, where body shaping is desired, or a combination thereof. For example, a shirt may include fibrous absorbing material attached to or inserted therein. The fibrous material may be positioned generally where a backpack would be located on a wearer, including at the back, where shoulder straps would be located, where a waist strap would be located, or a combination thereof. Other garments may include cycling shorts, where the fibrous absorbing material is positioned at or near the seat of the shorts, for example.

The fibrous absorbing material may be useful as part of an article of footwear. The fibrous absorbing material may be located at an insole of the footwear, at an outsole of the footwear, at any part that at least partially surrounds the foot, at any part that at least partially surrounds the heel, at any part that at least partially surrounds the ankle, or any combination thereof. The fibrous absorbing material may be located at or in the tongue of the article of footwear. The fibrous absorbing material may act to absorb perspiration from the foot. The fibrous absorbing material may act to regulate the temperature within the article of footwear. The fibrous absorbing material may act to direct heat or vapor out of the article of footwear.

The fibrous absorbing material may provide benefits such as compression resilience and puncture resistance, protection (e.g., by providing cushioning), breathability, padding, pressure relief, pressure distribution, moisture transference (e.g., moisture is moved from a surface of a user through one or more layers of the material), odor inhibition, cooling effects, insulative effects, or a combination thereof. The material may be shaped to fit the area to which it will be worn or used. The fibrous absorbing material may also be soft feeling, lightweight, washable, reusable, or a combination thereof. For example, the materials may give a balance of cooling, insulating, sweat management, and improved comfortable fit of the article including the fibrous absorbing material. The fibrous absorbing material may provide enhanced pressure distribution or pressure relief for a wearer.

The fibrous absorbing material as described herein may provide improved comfort to the wearer. The material may provide cushioning, wicking, temperature regulation (e.g., cooling and/or insulation), or a combination thereof at certain contact points between the article and the wearer. The material may provide cushioning, wicking, temperature regulation, or a combination thereof anywhere an article may cover (e.g., a wearer's back, chest, shoulders, joints, waist, head, foot, particular bones).

The soft cushioning and resilient properties improve the comfort and durability of the material, as compared with traditional cushioning materials, such as polyurethane foam and/or EVA foam materials. Resilient may mean the article or one or more layers thereof returns to its original uncompressed state when a force is removed within a predetermined amount of time (e.g., 60 seconds or less, 30 seconds or less, 10 seconds or less, 5 seconds or less). Polyurethane foam materials tend to break down over time under normal use conditions, particularly when exposed to moisture from sweat or outside conditions and must be replaced frequently. The materials described herein are more durable than polyurethane foam products, thereby saving cost and time replacing foam inserts or replacing the articles. Polyurethane foam is also a thermoset material that breaks down faster in hydrophilic conditions. Washing this material or exposing the material to moisture expedites the breakdown. The materials described herein may allow for a washable and/or reusable product. The materials described herein may provide a usable life that exceeds that of a traditional cushioning material, such as polyurethane foam.

The fibrous absorbing material may have a shape that is able to be positioned or installed within a particular article, such as a wearable article (e.g., protective articles, such as sports pads or ballistic vests, or wearable accessories such as backpacks). Shaping may occur through bending, cutting (e.g., die-cutting), thermoforming, flexing (e.g., at areas of localized flexibility or an entirely flexible fibrous absorbing material), the like, or a combination thereof. The fibrous absorbing material may be integrated into the structure of the article. The fibrous absorbing material may be attachable into the article. The fibrous absorbing material may be removably attachable (e.g., via hook and loop fastener, clips, snaps, zipper, removable from a pocket for receiving an insert, or the like). The fibrous absorbing material may be situated within an article without additional fastening required. For example, the fibrous absorbing material may be positioned within a designated pocket or area for receiving an insert. The fibrous absorbing material may be secured via adhesive, sewing, or other methods of attachment.

The total thickness of the fibrous absorbing material may depend upon the intended use or location of the fibrous absorbing material with an article. The total thickness may depend upon the number of layers or parts of the fibrous absorbing material. Certain areas may have a greater thickness than others. For example, an extended portion of the fibrous absorbing material may have a different thickness than a body portion of the fibrous absorbing material. The body portion may be a portion located between a surface having or producing moisture and another surface, such as a surface of the article of which the fibrous absorbing material is a part. The body portion may be the fibrous portion. Certain areas may have a contoured shape and/or topography to generally match the contours of the wearer's body where the fibrous absorption material is to be situated. The thickness may vary due to certain processing techniques, such as compression applied in certain areas and/or thermoforming or molding operations. The thickness may vary due to the presence of air flow channels within and/or across the fibrous absorbing material (e.g., formed via localized compression, stitching, molding, or the like). The thickness may decrease when approaching an edge of the fibrous absorbing material, particularly if at least some of the edges of the layers are sealed by a heat and/or compression technique. The thickness may vary due to the presence or lack of certain layers in some areas and not others. The lack of a particular layer or an area of reduced thickness may provide flexibility of the material (e.g., to allow for proper fit within an article; to allow for folding or bending of the material), reduction of material (e.g., by positioning cushioning elements only where needed), increased comfort (e.g., by positioning cushioning elements only where needed or where sweat or moisture are most likely to be produced), or a combination thereof.

The fibrous absorbing material may include one or more fibrous portions. The fibrous absorbing material may include one or more nonwoven portions or nonwoven materials. The fibers of at least a portion of the fibrous absorbing material may be arranged in a generally vertical orientation (e.g., vertical in the thickness direction). The fibers may be in a generally vertical orientation when in an uncompressed and/or unstressed state and/or prior to undergoing compression, sealing, localized compression, stitching, or the like.

One or more of the fibrous portions may have a high loft or thickness at least in part due to the orientation of the fibers and/or orientation of segments between loops or between an upper surface and a lower surface of the material in the thickness direction (e.g., oriented generally transverse to the longitudinal axis of the layer prior to undergoing any compression operations) of the fibrous portion and/or the methods of forming the fibrous portion. The fibrous portion may exhibit good resilience and/or compression resistance. The fibrous portion may be resistant to puncturing. The fibrous portion, due to factors such as, but not limited to, unique fibers, surfaces, physical modifications to the three-dimensional structure (e.g., via processing), orientation of fibers, orientation of loops or laps from one loop to an opposing loop (or portions thereof), fiber treatments (e.g., hydrophilic coatings or fiber treatments), or a combination thereof, may exhibit good moisture transfer and/or absorption characteristics versus traditional materials.

The fibrous portion (e.g., a carded and lapped fibrous portion) may have a weight of about 100 g/m² or greater, about 200 g/m² or greater, about 300 g/m² or greater, or about 400 g/m² or greater. The fibrous portion may have a weight of about 2000 g/m² or less, about 1500 g/m² or less, about 1200 g/m² or less, about 1000 g/m² or less, about 750 g/m² or less, or about 600 g/m² or less.

The weight may be selected based on the application. For example, certain wearable materials, such as bra cups, may have a weight of about 150 g/m² to about 250 g/m². Padding materials, such as knee pads or horse blankets, may have a weight of about 1000 g/m² to about 2000 g/m². Materials for backpacks (e.g., shoulder straps and/or back contact portions) may be about 500 g/m² to about 1500 g/m². Standard backpacks may be toward the lower weight end of the range, whereas military backpacks may be toward the higher weight end of the range. A fibrous portion located within an upper of the article of footwear may have a weight of about 200 g/m² to about 500 g/m². In another example, a fibrous portion located at an insole may have a weight of about 600 g/m² to about 1200 g/m². These ranges are exemplary and are not intended to serve as limiting. Any value or range of values within the exemplary ranges is contemplated as being within the scope of the teachings.

The fibrous portion may be adjusted based on the desired properties. The fibrous portion may be tuned to provide a desired weight, thickness, compression resistance, or other physical attributes. The fibrous portion may be tuned to provide a desired moisture absorption or moisture transfer rate. The fibrous portion may be tuned to provide a desired drying rate. The fibrous portion may be formed from nonwoven fibers. The fibrous portion may be a nonwoven structure. The fibrous portion may be a lofted material. The fibrous portion may be thermoformable so that the layers may be molded or otherwise manufactured into a desired shape to meet one or more application requirements. The fibrous portion may be die-cut or otherwise shaped to fit within a desired application or article.

The fibrous portion may be formed into a nonwoven web using nonwoven processes including, for example, blending fibers, carding, lapping, air laying, mechanical formation, or a combination thereof. The process of forming the fibrous portion may be free of one or more of these processing steps. Through one or more of these processes, the fibers or a proportion of fibers may be arranged in a desired orientation. Through one or more of these processes, the fibers or a proportion of fibers may be oriented in a generally vertical direction or near-vertical direction (e.g., in a direction generally perpendicular to the longitudinal axis of the fibrous layer, a direction generally perpendicular to the plane of an adjacent layer, or both).

Fiber orientation or fiber direction as used herein may refer to measurements of individual fibers, measurements of average direction of fibers (e.g., as visible trends in an enlarged photograph), or both. Direction of the fibers may be determined through the entire thickness of the material. Direction of the fibers may be determined through only a portion of the thickness of the material.

Direction of the fibers may be determined by observing the general trend of the fibers in a particular portion of a sample. For example, direction of fibers may be determined by observing the general trend of the fibers between a surface of the material (e.g., the surface adapted to face a user or wearer, the surface adapted to face a surface having or producing moisture, or both) and about 50% into the thickness of the material or less, about 30% or less, about 25% or less, about 15% or less, or about 10% or less, or any percentage or range of percentages between 0% (e.g., at the surface) and 50%. For example, the direction may be determined by observing the general trend of the fibers between a surface of the material and about 30% or less into the thickness of the material.

For example, in observing a sample at a magnification of 10x or less, about 5x or less, or about 3x or less, viewing the material (e.g., with the naked eye) looking at the cross-direction (or a cross-section of the machine direction), the general trend of fibers may be observed between the surface and about 25% into the thickness of the material.

In a more specific example, a fibrous absorbing material having a thickness of 20 mm may be observed at 3x magnification. A general trend of the fibers approaching a surface may be measured using software or a protractor. The angle may be measured between the surface and about 5 mm into the thickness from the surface.

Orientation of fibers or orientation of portions of segments between loops, or orientation of portions of segments between one surface and an opposing surface in the thickness direction, may be considered at or near the surface adapted to contact a user. The fibers or a proportion of fibers may be arranged at an angle of about 30 degrees or greater, 45 degrees or greater, about 60 degrees or greater, or about 75 degrees or greater relative to the longitudinal axis of the fibrous layer, relative to the surface adapted to contact the surface having or producing moisture, relative to a plane of a surface of an adjacent layer, or a combination thereof. The fibers or a proportion of fibers may be arranged at an angle of about 150 degrees or less, about 135 degrees or less, about 120 degrees or less, or about 105 degrees or less. The angle may be formed prior to any compression steps or further processing steps (e.g., shaping steps, lamination, application of facing materials, skinning the surface of the material, the like, or a combination thereof) that may alter the thickness or orientation of the fibers. The angle may be determined by observing the general trend of the fibers between the surface and a point or line into the thickness from the surface.

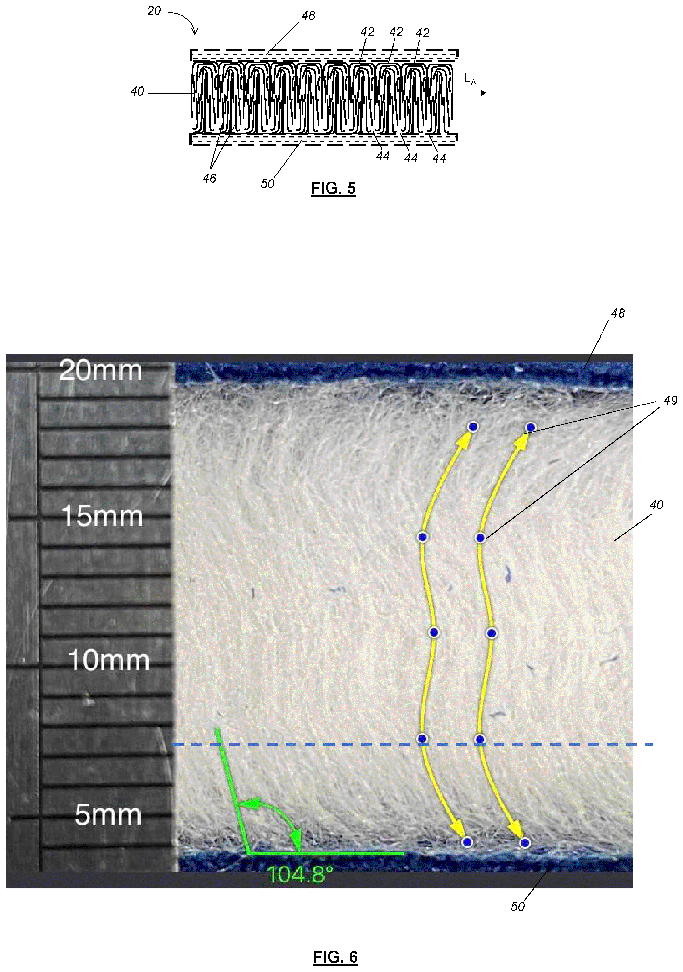

A method for determining orientation of fibers within a fibrous material may include superimposing a grid upon an image of the fibrous material, viewing the material from the side at its thickness (e.g., viewing the cross-direction or a cross-section of the machine direction). Cells in the grid may be evaluated separately. The grid may include three or more rows and three or more columns. The grid and/or cells thereof may be square. The grid and/or cells thereof may be non-square. There may be the same number of rows and columns. There may be different numbers of rows and columns. For example, a grid could be superimposed on the photos of Figures 6-9. The more cells within the grid, the greater the accuracy of the calculation. For example, a 10 by 10 grid would produce 100 cells, where the angle of the average trend of visible fibers relative to the bottom of the cell, relative to the surface adapted to contact the wearer, relative to a top surface, relative to a bottom surface, relative to the longitudinal axis of the material or a combination thereof, could be calculated. A generally vertical orientation of the fibers in the cell may be at an angle between about 45 degrees and about 135 degrees, between about 60 degrees and about 120 degrees, between about 75 degrees and about 105 degrees.

The percentage of fibers of the fibrous portion, or the percentage of cells having a calculated angle of the average trend of visible fibers, in a generally vertical direction prior to any compression operations may be about 50% or greater, about 60% or greater, about 70% or greater, or about 75% or greater. The percentage of fibers or the percentage of cells having a calculated angle of the average trend of visible fibers of the fibrous portion in a generally vertical direction prior to any compression operations may be about 100% or less, about 95% or less, about 90% or less, or about 85% or less. For example, the percentage of fibers or the percentage of cells having a calculated angle of the average trend of visible fibers in a generally vertical direction prior to any compression operations may be about 75% or greater and/or about 85% or less (e.g., about 80%).

Visible fibers or a visible trend may be determined using the naked eye. The material (or an image thereof) may be viewed under magnification (e.g., about 10x magnification or less, about 5x or less, or about 3x or less). The magnified image may then be viewed with the naked eye.

When viewing the fibrous material at its thickness (e.g., viewing the cross-direction or a cross-section of the machine direction), there may be one or more inflection points where the trend of fibers or segments between one surface and an opposing surface of the fibrous portion changes direction. Despite the change in direction, it is possible the fibers may still be considered generally vertical. For example, an angle of visible trending fibers may be about 60 degrees until reaching an inflection point. The direction may change at the inflection point, where the angle of the new visible trend relative to the longitudinal axis of the material is about 120 degrees. Both 60 degrees and 120 degrees may be considered vertical where a generally vertical orientation of the fibers includes angles between about 45 degrees and about 135 degrees or between about 60 degrees and about 120 degrees.

In a material with a plurality of inflection points, using the grid method may be if determining orientation via the grid method, to determine whether the fibers or trend of fibers are generally vertical, smaller and/or more cells may be necessary to more easily view, determine, and/or calculate the trend or average direction of the fibers within the cell.

The orientation of fibers may be evaluated at or near the surface adapted to contact the wearer or the source of moisture. The average angle of approach of the fibers, laps, loops, or the like to the surface may be calculated. The average angle of approach or incidence angle may be measured between halfway through the thickness and the surface (e.g., within about 50 percent of the thickness) or less, within about 30 percent of the thickness or less, within about 25 percent of the thickness or less, within about 15 percent of the thickness or less. For example, the angle may be measured by viewing fibers and/or visible trends of fibers between the surface and 10 mm or less away from the surface into the thickness of the material, about 7 mm or less, about 5 mm or less, or about 2 mm or less.

If calculating using the grid, one or more rows of cells closest to the surface adapted to contact the wearer or the source of moisture may be evaluated. The angle of approach of the fibers, laps, loops, or the like to the surface may be calculated within each cell of the grid. The percentage of cells with fibers considered to be generally vertical may be about 50% or greater, about 60% or greater, about 70% or greater, about 75% or greater, or about 100% or less.

A vertical portion may have a height into the thickness or an average height into the thickness of about 0.5 mm or greater, about 1 mm or greater, or about 2 mm or greater. A vertical portion may have a height into the thickness or an average height into the thickness of about 20 mm or less, about 18 mm or less, about 15 mm or less, about 10 mm or less, about 7 mm or less, about 6 mm or less, or about 5 mm or less.

At or near the loops of the fibrous portion, or where the fibers contact a facing layer, the fibers may be oriented or may have a generally visible trend generally horizontally, where generally horizontal is measured within about ± 45 degrees from horizontal, within about ± 30, or within about ± 15, and where horizontal is generally parallel to the longitudinal axis of the fibrous portion, generally parallel to one or more facing layers, generally perpendicular to the thickness direction, or a combination thereof. The percentage of fibers of the fibrous portion in a generally horizontal direction may be about 5% or greater, about 10% or greater, or about 15% or greater. The percentage of fibers of the fibrous portion in a generally horizontal direction may be about 30% or less, about 27% or less, or about 25% or less. For example, the percentage of fibers in a generally horizontal direction may be about 18% or more to about 22% or less (e.g., about 20%).

The amount of fibers in a generally random orientation may be the remaining fibers that are not horizontal or vertical. Fibers may be randomized prior to undergoing one or more processing steps. For example, fibers may be randomized before lapping.

The percentage of randomly oriented fibers in the fibrous portion may be about 0% or greater. The percentage of randomly oriented fibers in the fibrous portion may be about 10% or less, about 5% or less, or about 2% or less.

The fibers may be opened and blended using conventional processes. The resulting structure formed may be a lofted fibrous material. The lofted fibrous material may be engineered for optimum weight, thickness, physical attributes, thermal conductivity, insulation properties, moisture absorption, or a combination thereof.

One or more fibrous portions may be formed, at least in part, through a carding process. The carding process may separate tufts of material into individual fibers. During the carding process, the fibers may be aligned in substantially parallel orientation with each other and a carding machine may be used to produce the web. The fibers may extend generally in the machine direction or generally parallel to the machine direction. The fibers may be randomized.

A carded web may have a thickness that allows for further processing if desired. The carded web may have a thickness of about 0.5 mm or greater, about 1 mm or greater, or about 2 mm or greater. The carded web may have a thickness of about 10 mm or less, about 7 mm or less, about 5 mm or less, or about 3 mm or less. The thickness of the carded web may be altered upon further processing. For example, further processing, such as lapping, may reduce the thickness of at least portions of the carded web. Further processing may increase the thickness of the fibrous portion, even if the thickness of the carded web is decreased in at least certain areas (e.g., by creating a lapped structure using the carded web).

A carded web may undergo a lapping process to produce the fibrous portion. The carded web may be rotary lapped, cross-lapped, vertically lapped, or a combination thereof, to form a voluminous or lofted nonwoven material. The carded web may be vertically lapped according to processes such as "Struto" or "V-Lap", for example. The carded web may be rotary lapped. This construction provides a web with relative high structural integrity in the direction of the thickness of the fibrous layers, thereby minimizing the probability of the web falling apart during application, or in use, and/or providing compression resistance to the layered material. Carding and/or lapping processes may create nonwoven fibrous layers that have good compression resistance through the vertical cross-section (e.g., through the thickness of the fibrous absorbing material) and may enable the production of lower mass fibrous layers, especially with lofting to a higher thickness without adding significant amounts of fiber to the matrix. It is contemplated that a small amount of hollow conjugate fiber (i.e., in a small percentage) may improve lofting capability and resiliency to improve moisture absorption, physical integrity, or both. Such an arrangement also provides the ability to achieve a low density web with a relatively low bulk density.

The lapping process may create a looped, sinusoidal, or undulated appearance of the fibers when viewed from its cross-section prior to any compression operation. The loops may have generally curved or rounded portions (e.g., as opposed to sharp creases from a traditional pleating operation). The frequency of the loops or undulations may be varied during the lapping process. For example, having an increase in loops or undulations per area may increase the density and/or stiffness of the portion or portions of the fibrous absorbing material. Reducing the loops or undulations per area may increase the flexibility of the portion or portions of the fibrous absorbing material and/or may decrease the density.

The ability to vary the loop or undulation frequency during the lapping process may allow for properties of the material to be varied or controlled. It is contemplated that the loop or undulation frequency may be varied throughout the material. During the lapping process, the loop frequency may be dynamically controlled and/or adjusted. The adjustment may be made during the lapping of a layer of the material. For example, certain portions of the fibrous portion or the fibrous absorbing material may have an increased frequency, while other portions of the fibrous portion or the fibrous absorbing material may have a frequency that is lower. The adjustment may be made during the lapping of different layers of the material. Different layers may be made to have different properties with different loop frequencies. For example, one portion may have a loop frequency that is greater than or less than another portion of the fibrous portion or fibrous absorbing material.

The frequency of loops may be about 5 loops per decimeter or greater, about 7 loops per decimeter or greater, or about 10 loops per decimeter or greater. The frequency may be over the entire fibrous portion. The frequency may be over only a portion of the fibrous portion. If the fibrous portion has a varying frequency, the average frequency for at least a portion of the fibrous portion may be about 5 loops per decimeter or greater, about 7 loops per decimeter or greater, or about 10 loops per decimeter or greater. The frequency of loops may be about 70 loops per decimeter or less, about 60 loops per decimeter or less, about 50 loops per decimeter or less, about 40 loops per decimeter or less, or about 35 loops per decimeter or less. If the fibrous portion has a varying frequency, the average frequency for at least a portion of the fibrous portion may be about 50 loops per decimeter or less, about 40 loops per decimeter or less, or about 35 loops per decimeter or less.

The distance between adjacent loops may be determined by the frequency of the loops. The distance between two adjacent loops may be about 0 mm (i.e., no gap between loops) or greater, about 0.25 mm or greater, or about 0.5 mm or greater. The distance between two adjacent loops may be about 3 mm or less, about 2 mm or less, or about 1 mm or less. The distance may be measured from one crest to an adjacent crest. The distance may be measured from the closest points between the two loops. The distance may be measured from the farthest points between the two loops on opposing sides of the gap. The distance may be measured by calculating the average gap at multiple points between the two loops. The distance may be measured between one point and another point.

A loop may have an outer radius and an inner radius. The radii may be determined by the frequency of the loops. The outer radius of a loop may be about 1 mm or greater, about 2 mm or greater, or about 2.5 mm or greater. The outer radius of a loop may be about 5 mm or less, about 4 mm or less, or about 3.5 mm or less. For example, the outer radius of a loop may be about 2.75 mm or greater and about 3.25 mm or less (e.g., about 3 mm). The inner radius of a loop may be about 0.5 mm or greater, or about .75 mm or greater. The inner radius of a loop may be about 2 mm or less, or about 1.5 mm or less. For example, the inner radius of a loop may be about .75 mm or greater and about 1.25 mm or less (e.g., about 1 mm).

At least some of the loops within the fibrous portion may be compressed upon additional processing, adding of layers to the fibrous absorbing material, or both. This may cause the loops to flatten or otherwise deform at least partially. This may create a generally horizontal orientation of fibers (e.g., at the areas of contact with a facing layer) that are generally parallel to an adjacent layer of material or opposing surface. The adjacent layer may be an outer layer of the fibrous absorbing material. This may also act to increase the surface area of the fibers and/or fibrous portion contacting the adjacent layer of material. This increased surface area may enhance the movement of moisture to the adjacent layer. Between upper loops and lower loops or between one surface of the material and the opposing surface may be a generally vertical portion of fibers. In referring to generally vertical fibers, this may include an average measurement of angles with individual fibers at a particular area of the material. This may include an average measurement of angles with a visible trend of fiber direction. This may include an average measurement of angles and/or individual fibers within a designated area of the material (e.g., at or near a surface, such as a surface of the material adapted to face the wearer or the source of moisture, or between a surface and a measurement into the thickness of the material).

In an exemplary fibrous portion, the carded web, with the fibers generally extending in the machine direction, may then undergo a lapping process, creating a series of loops or undulations (e.g., appearing as generally curved or rounded peaks and valleys when viewed from the side or a cross section). The loops (e.g., line extending across an entire peak or valley) may extend across the surface of the material generally perpendicularly to the longitudinal axis of the fibrous portion, generally perpendicularly to the longitudinal axis of the article or portion of the article, generally perpendicularly to the machine direction, or a combination thereof.

In another exemplary fibrous layer, it is contemplated that the loops (e.g., line extending across an entire peak or valley) may extend generally parallel to the longitudinal axis of the fibrous portion, generally parallel to the longitudinal axis of the article or portion of the article, or both.

The fibrous portion may be formed by an air laying process. This air laying process may be employed instead of carding and/or lapping. In an air laying process, fibers are dispersed into a fast moving air stream, and the fibers are then deposited from a suspended state onto a perforated screen to form a web. The deposition of the fibers may be performed by means of pressure or vacuum, for example. An air laid or mechanically formed web may be produced. The web may then be thermally bonded, air bonded, mechanically consolidated, the like, or combination thereof, to form a cohesive nonwoven fibrous layer. While air laying processes may provide a generally random orientation of fibers, there may be some fibers having an orientation that is generally in the vertical direction so that resiliency in the thickness direction of the material may be achieved. Formation of the fibrous portion may be free of an air laying process.

During processing of the material, the fibrous layers may be compressed. Compression may occur during lamination, thermoforming in-situ, or the like. Compression may reduce thickness of the fibrous portion. The thickness may be reduced by 30% or more, about 40% or more, about 50% or more, or about 55% or more. The thickness may be reduced by about 80% or less, about 75% or less, about 67% or less, or about 60% or less. For example, a fibrous layer prior to compression may be about 15 mm to about 18 mm thick. After compression, the fibrous layer may be about 9 mm to about 10 mm. Upon compression, instead of a generally sinusoidal cross-section with generally straight segments between opposing loops, the segments between the loops may be generally C-shaped, S-shaped, Z-shaped, or otherwise curved, folded, or bent. After compression, a portion of the material may retain generally vertical segments between opposing loops, creating a lofted portion. A portion of the material may become densified, such that the densified segment between opposing loops is folded over itself, curved, forming a generally horizontal segment, or a combination thereof.

The total thickness of the fibrous portion of the fibrous absorbing material at a particular point may be about 1 mm or greater, about 2 mm or greater, about 3 mm or greater, or about 5 mm or greater. The total thickness of the fibrous portion of the fibrous absorbing material at a particular point may be about 50 mm or less, about 35 mm or less, about 20 mm or less, about 15 mm or less, about 10 mm or less, or about 8 mm or less.

The fibrous portion may have a generally uniform distribution of fibers. The fibrous portion may have a generally uniform density throughout the thickness of the material. The fibrous portion may have a varying structure and/or density through the thickness. The fibrous portion may have a varying structure and/or density along its length and/or width. The fibrous portion may have a gradient structure where the material becomes more rigid or has a greater density. The change in density may be gradual. The gradient structure may be in the thickness direction. For example, the fibrous portion may have a softer and/or loftier interior surface (e.g., a surface facing the wearer), and a harder and/or denser external surface (i.e., facing away from the wearer) for attaching to the outer portion of the article. The gradient structure may include generally vertical segments between generally opposing loops at the surfaces, with a densified portion therebetween. The gradient structure may be across the length or width of the material. The gradient structure may enhance moisture evaporation rate on one side.

A change in density between one surface of the fibrous portion and an opposing surface of the fibrous portion may be due to processing techniques, such as the application of heat and/or increased pressure. For example, application of heat and/or increased pressure at or near one surface and not at an opposing surface may result in a higher density material adjacent the surface with the heat and/or pressure, as compared to the opposing surface. Application of heat and/or increased pressure at both surfaces may result in a higher density material at or near the surfaces, but a lower density toward the center of the material in the thickness direction. In a construction with a fibrous portion sandwiched between two facing materials, application of heat and/or increased pressure at or near one surface may result in a different angle of approach of the fibers and/or loops to a facing material. For example, the fibers and/or loops may be closer to parallel with a facing material than the angle of approach of the fibers and/or loops to the opposing facing material.

The fibrous portion may have a gradient structure where different portions of the fibrous portion absorb or hold different amounts of fluid or moisture. Different portions or areas may have different saturation points. For example, the fibrous portion may have a gradient structure in the thickness direction. Toward one surface of the fibrous portion, a greater volume of fluid may be absorbed and/or held within the material. In areas having a greater fluid capacity or a higher saturation point, additional fluid may be drawn to that area, thereby pulling the fluid or moisture away from the wearer, toward an area of increased evaporation, or both. For example, an area capable of containing or absorbing more fluid may be located at or near an area where there is increased air flow. The ability to draw more moisture to an area that also more quickly achieves evaporation may further improve the drying rate of the material. The gradient structure may occur within a single layer of material (e.g., as a result of fibers or other fillers used, the density of the material, processing techniques, the like, or a combination thereof). The gradient structure may occur through two or more layers arranged in generally planar contact.

Orientation of fibers or the general trend of fibers between opposing loops of the fibrous portion may impact the transfer of moisture and/or comfort to the wearer. For example, where the fibers are generally vertical relative to the source of moisture, the moisture may be pulled through the material along the generally vertical fibers and into the fibrous portion, creating a feeling of dryness to the touch at the surface of the material. This feeling of dryness to the touch at the surface may occur more quickly when the fibers are generally vertical at or near the surface. The moisture may be drawn into a denser area of the material if the fibrous portion has a density gradient structure, such that even if the entire material is not yet dry, the surface feels dry to the touch, providing comfort, dryness, cooling, insulation, or a combination thereof to the wearer.

The drying rate, comfort to the touch (e.g., feeling of dryness to the touch), or rate of evaporation for the fibrous portion (or the fibrous absorbing material as a whole) may be improved over other products, such as foams or cross-lapped products. This may be due, at least in part, to factors such as shape, porosity, permeability, fiber orientation of the fibrous portion, orientation of the loops of the fibrous portion, or a combination thereof. The fibrous portion may have a high porosity, high percentage of open areas, high permeability, or combination thereof. This may allow for air to flow more efficiently through the material, as opposed to a more tortuous material such as a foam or cross-lapped material. The fibrous portion may have a porosity of about 90% or greater, about 96% or greater, about 97% or greater, or about 98% or greater or about 99% or greater. The porosity of the fibrous portion may be less than 100%.

The fibrous portion comprises fibers. In describing fibers of the fibrous portion, the present description may refer to "the fibers." It is contemplated that a reference to "the fibers" may be a reference to all of the fibers of the fibrous portion. It is contemplated that a reference to "the fibers" may be in reference to only a portion of the fibers of the fibrous portion.

The fibrous portion may be permeable. The fibrous portion may be porous. The fibrous portion may have pores. The pores may be formed from interstitial spaces between the fibers and/or the shape (e.g., by having a multi-lobal or deep-grooved cross-sectional fiber) of the fibers. The pores may extend throughout the entire thickness of the fibrous portion. The pores may extend through a portion of the thickness of the fibrous portion. The pores and/or the vertical orientation of the fibers may create a capillary effect or chimney effect for absorbing moisture or removing moisture from one surface and transferring to another area (e.g., to a moisture wicking layer, to a contact layer, to another portion of the fibrous portion, and the like). For example, the fibrous portion may push and/or pull the moisture from a first surface of the fibrous portion to an opposing second surface of the fibrous portion through the thickness of the fibrous portion. Capillary effect, or capillary action, is the ascension of liquids through a tube, pore, cylinder, or permeable substance due to adhesive and cohesive forces interacting between the liquid and the surface. The diameter of the pores or channels defined by the fibers (e.g., forming a capillary) for movement of liquid may be selected based on the thickness of the material through which the liquid must travel. A thinner diameter capillary or channel may see the liquid rise higher than liquid in a larger diameter capillary or channel due to capillary action because of adhesive forces.

Liquid moisture may be driven to move through the structure by having a water concentration gradient. In the three-dimensional structure of the fibrous portion, a higher water content may be located at or near the source of moisture. A lower water content may be located away from the source of the moisture. The forces that drive the liquid through the three-dimensional fibrous portion may be capillary forces governed by the concentration gradient, surface tension, and/or energy differences between the moisture (e.g., sweat) and the fiber surfaces. The geometry of the three-dimensional fibrous portion (macro) and/or of the fibers themselves (meso structure) may have an effect on the capillary forces. The surface energy of the fibers may have an effect and may be governed by the fiber chemistry and/or any surface treatments on the fibers (e.g., hydrophilic wicking agents).

Fibers within the fibrous portion may be hydrophilic. The hydrophilic nature may be due to coatings, treatments, or finishes on the fibers. The hydrophilic nature may be inherent in the fiber itself. Hydrophilic fibers (e.g., inherently hydrophilic or with a hydrophilic treatment, finish, or coating), may be about 10 percent by weight of the fibers of the fibrous portion or greater, about 20 percent by weight or greater, about 40 percent by weight or greater, about 50 percent by weight or greater, about 60 percent by weight or greater. Hydrophilic fibers may be up to 100 percent by weight of the fibers of the fibrous portion. Hydrophilic fibers may be about 10 percent by weight of the staple fibers of the fibrous portion or greater, about 20 percent by weight or greater, about 40 percent by weight or greater, about 50 percent by weight or greater, about 60 percent by weight or greater. Hydrophilic fibers may be up to 100 percent by weight of the staple fibers of the fibrous portion. Staple fibers may be fibers that are non-binding and/or non-bi-component fibers.

For example, up to 100 percent of the staple fibers (e.g., polyester fibers) may be hydrophilic fibers. In a non-limiting example where the fibers include about 60 percent by weight to about 80 percent by weight (e.g., about 70 percent by weight) staple fibers and about 20 percent by weight to about 40 percent by weight (e.g., about 30 percent by weight) bi-component fiber and/or binder, and all of the staple fibers are hydrophilic fibers, then the fibrous portion includes at least about 60 percent by weight to about 80 percent by weight (e.g., about 70 percent by weight) hydrophilic fibers.

The hydrophilic finish or coating may create or improve the capillary effect of drawing the moisture into the capillaries or channels formed by the fibers or improve absorption of the material by drawing the moisture away from the user. Water has a lower surface energy than a hydrophilic fiber. The moisture may fall apart into film form (i.e., will not form droplets). The moisture may attach to and wick along the fiber surface. As moisture moves in a liquid film, capillary action may occur, wetting out the fiber and fabric surfaces. The capillary action may eventually be balanced out in the vertical direction by the force of gravity.

As the moisture is attracted to and moves along the fibers, the moisture may be pulled away from the wearer, the surface having or producing moisture, or both. The travel or transfer of moisture from the surface into the structure may give a perceived feeling of dryness (e.g., dry to the touch), even if all moisture has not evaporated or even if the entirety of the material is not completely dry. Fiber orientation or visible trends of the fibers may have an impact on how quickly the surface or surfaces of the material are dry to the touch. For example, where the visible trend of the fibers is generally horizontal, moisture is held near the surface and not pulled into the structure. Where the fibers are non-horizontal, where the fibers are generally vertical, or both, moisture movement from the surface may be accelerated as compared with generally horizontal orientation. There may be an additional transportation of moisture due to the fiber orientation directing the moisture further into the structure. It is contemplated that the more vertical the orientation of the visible fiber trend (e.g., approaching generally perpendicular to the surface), the greater the water or moisture uptake into the structure occurs.

As the moisture is attracted to and moves along the fibers, the moisture may have a tendency to evaporate. Evaporation is a function of how thick the moisture film is, the surface area of the moisture exposed to air, and the humidity and/or temperature of the air surrounding the moisture/air interfaces.

Fibers within the fibrous portion may be hydrophobic. The hydrophobic nature maybe due to coatings or finishes on the fibers. The hydrophobic nature may be inherent in the fiber itself. A hydrophobic fiber would have a lower surface energy than the moisture. The moisture would stay in droplet or bead form. The droplets or beads may have to be pulled through the material by another force, such as gravity, inertia, shaking, forced air, wind, the like, or a combination thereof.

The ability of the fibrous portion to pull or push moisture through the material may be, at least in part, due to the geometries of the fibers. The fibers may have a cross-section that is substantially circular or rounded. The fibers may have a cross-section that has one or more curved portions. The fibers may have a cross-section that is generally oval or elliptical. The fibers may have a cross-section that is non-circular. Such non-circular cross-sections may create additional tubes or capillaries within which the moisture can be transferred. For example, the fibers may have geometries with a multi-lobal cross-section (e.g., having 3 lobes or more, having 4 lobes or more, or having 10 lobes or more). The fibers may have a cross-section with deep grooves. The fibers may have a substantially "Y"-shaped cross-section. The fibers may have a polygonal cross-section (e.g., triangular, square, rectangular, hexagonal, and the like). The fibers may have a star shaped cross-section. The fibers may be serrated. The fibers may have one or more branched structures extending therefrom. The fibers may be fibrillated. The fibers may have a cross-section that is a nonuniform shape, kidney bean shape, dog bone shape, freeform shape, organic shape, amorphous shape, or a combination thereof. The fibers may be substantially straight or linear, hooked, bent, irregularly shaped (e.g., no uniform shape), or a combination thereof. The fibers may include one or more voids extending through a length or thickness of the fibers. The fibers may have a substantially hollow shape. The fibers may be generally solid. The shape of the fibers may define capillaries or channels through which moisture can travel (e.g., from one side of the fibrous portion to an opposing side of the fibrous portion).

The movement of the moisture within the fibrous portion is not limited to vertical movement in the thickness direction. Moisture may move at any angle relative to the thickness direction. Moisture may move at any angle relative to the longitudinal axis of the material along the length or width of the material. Due to the porous structure of the fibrous portion, moisture may move over, up, or both. Moisture may travel to areas of less moisture (e.g., toward areas at or near an air vent or opening of an article). Moisture may travel along fibers. Therefore, particular orientations of fibers may aid in the transfer and/or evaporation of moisture. In a lapped structure, such as a vertically lapped structure, moisture may travel across loops (e.g., via fibers therebetween), between opposing loops (e.g., from a lower loop to an upper loop), or both.

The generally horizontal fibers within the fibrous portion may aid in taking up or delivering moisture. The generally horizontal orientation of the fibers (e.g., at a top of a loop, such as where bonding to an outer layer), may improve the transfer rate or flux of liquid to an outer layer due to the surface area of the fiber being in contact with the outer layer or outer structure.

Moisture may travel along the surface of the fibers and around fiber-to-fiber contact points. The fibers in the vertical orientation may move liquid efficiently within the bulk structure. This may be due, at least in part, to the presence of crimped fibers crossing and touching each other. Fibers arranged in a generally horizontal orientation (e.g., at a compacted area near a top of a loop) and the interface with an adjacent layer (e.g., an outer layer) may improve transfer of liquid from the loop through the fabric/fiber interface of the outer layer.

Fibers that make up the fibrous portion may have an average linear mass density of about 0.5 denier or greater, about 1 denier or greater, or about 5 denier or greater. The material fibers that make up the fibrous portions may have an average linear mass density of about 25 denier or less, about 20 denier or less, about 15 denier or less, or about 10 denier or less. For example the fibers of the fibrous portion may have an average linear mass density of about 5 denier or greater and about 7 denier or less (e.g., about 6 denier). Fibers may be chosen based on considerations such as cost, resiliency, desired moisture absorption/resistance, or the like. For example, a coarser blend of fibers (e.g., a blend of fibers having an average denier of about 12 denier) may help provide resiliency to the fibrous portions. A finer blend (e.g., having a denier of about 10 denier or less or about 5 denier or less) may be used, for example, if a softer material is required to contact a user's skin.

Fibers that make up the fibrous portion may have a generally constant diameter. This may reduce the tortuosity of the material as compared with an open cell polyurethane foam, for example. This may provide increased permeability of the material as compared with the foam. This may provide enhanced ability to transport fluid in a particular direction (e.g., away from the body or user or source of moisture).

Fibers may have a staple length of about 1.5 millimeters or greater, about 30 mm or greater, or even about 75 millimeters or greater (e.g., for carded fibrous webs). For example, the length of the fibers may be between about 30 millimeters and about 75 millimeters. The fibers may have an average or common length of about 50 to 75 millimeters staple length, or any length typical of those used in fiber carding processes.

Short fibers may be used (e.g., alone or in combination with other fibers) in any nonwoven processes. For example, some or all of the fibers may be a powder-like consistency (e.g., with a fiber length of about 3 millimeters or less, about 2 millimeters or less, or even smaller, such as about 200 microns or greater or about 500 microns or greater). Fibers of differing lengths may be combined to provide desired properties. The fiber length may vary depending on the application; the moisture properties desired; the type, dimensions and/or properties of the fibrous material (e.g., density, porosity, desired air flow resistance, thickness, size, shape, and the like of the fibrous portion and/or any other portion of the fibrous absorbing material); or any combination thereof. The addition of shorter fibers, alone or in combination with longer fibers, may provide for more effective packing of the fibers, which may allow pore size to be more readily controlled in order to achieve desirable characteristics (e.g., moisture interaction characteristics).

The fibrous portion (or any other portion of the material) may include fiber blends. The fibrous portion may include natural, manufactured, or synthetic fibers. Suitable natural fibers may include cotton, jute, wool, flax, silk, cellulose, glass, and ceramic fibers. The fibrous portion may include eco-fibers, such as bamboo fibers or eucalyptus fibers. Suitable manufactured fibers may include those formed from cellulose or protein. Suitable synthetic fibers may include polyester, polypropylene, polyethylene, Nylon, aramid, imide, acrylate fibers, or combination thereof. The fibrous portion material may comprise polyester fibers, such as polybutylene terephthalate (PBT), polyethylene terephthalate (PET), polytrimethylene terephthalate (PTT), and co-polyester/polyester (CoPET/PET) adhesive bi-component fibers. The fibers may include polyacrylonitrile (PAN), oxidized polyacrylonitrile (Ox-PAN, OPAN, or PANOX), olefin, polyamide, polyetherketone (PEK), polyetheretherketone (PEEK), polyethersulfone (PES), or other polymeric fibers. The fibers may be selected for their melting and/or softening temperatures. Fibers may be inorganic fibers. The fibers may include mineral or ceramic fibers. The fibers may be or may include elastomeric fibers. Elastomeric fibers may provide cushioning performance and/or compressibility and recovery properties. Exemplary elastomeric fibers include elastic bicomponent PET, PBT, PTT, or a combination thereof. The fibers may be formed of any material that is capable of being carded and lapped into a three-dimensional structure. The fibers may be 100% virgin fibers or less. The fibrous portion may contain fibers regenerated from postconsumer waste (for example, up to about 90% fibers regenerated from postconsumer waste and/or post industrial waste or even up to 100% fibers regenerated from postconsumer waste). For example, the fibrous portion may comprise recycled PET fibers. The fibers may have or may provide improved moisture absorption or moisture resistance characteristics, or both.

The fibers and/or the fibrous portion may be recyclable. This may help to reduce waste, rather than discarding the fibrous absorbing material, the fibrous portion, or both. About 50% or greater, about 70% or greater, or about 80% or greater of the fibers in the fibrous portion may be recycled. About 100% or less of the fibers in the fibrous portion may be recycled.

Fibers may have particles embedded therein. The particles may act to remove moisture in the vapor stage (e.g., before becoming liquid). The particles may be embedded through an extrusion process. These particles may provide breathability and/or waterproofing properties to the fibrous portion. The particles present in the fibers may increase the surface area of the fiber by 50% or more, about 100% or more, by 200% or more, or by 500% or more as compared with a fiber that is free of embedded particles. The particles may increase the surface area of the fiber by about 1200% or less, about 1000% or less, or about 900% or less. The high surface area of the fiber may provide high adsorption properties. These fibers may assist in providing heating and/or cooling. These fibers may provide odor control, humidity control (e.g., body humidity control), or both. The particles may assist in removing or driving moisture vapor away from the source (e.g., through the portion or layer). Embedded particles may include, but are not limited to, wood, shells (e.g., fruit and/or nut shells, such as coconut shells or fibers thereon, hazelnut shells), activated carbon, sand (e.g., volcanic sand), or a combination thereof. For example, the fiber may be a PET fiber extruded with active carbon and/or volcanic sand.

The fibers may have or may provide improved thermal insulation properties. The fibers may have relatively low thermal conductivity. Such fibers may be useful for retaining heat or slowing the rate of heat transfer (e.g., to keep a user or wearer warm). The fibers may have or may provide high thermal conductivity, thereby increasing the rate of heat transfer. Such fibers may be useful for extracting heat from the surface of the source of moisture (e.g., to cool a user or wearer). The fibers may have geometries that are non-circular or non-cylindrical. The fibrous portion may include or contain engineered aerogel structures to impart additional thermal insulating benefits. The fibrous portion may include or be enriched with pyrolyzed organic bamboo additives.

The fibers, or at least a portion of the fibers, may be super absorbing fibers (SAF). The SAF may be formed of a cellulose material or a synthetic polymeric material, for example. The SAF may be in a blend with other fibers. The SAF may be present in an amount of about 60% of the blend by weight or less, about 50% by weight or less, or about 40% by weight or less. The SAF may be present in an amount greater than 0%, about 1% by weight or greater, or about 5% by weight or greater. The SAF may pull moisture into the material cross-section, where it may evaporate.

The fibers, portions of the fibers, or portions of the fibrous portion may include phase change materials.

The fibrous portion may include one or more antimicrobial agents for controlling odor, resisting mold and mildew in the fibrous portion, or both. The fibrous portion may be or may include one or more additives, coatings, finishes, particles, or fibers (e.g., inherent in the fibers or coatings on the fibers) to provide anti-odor and/or antimicrobial properties to the fibrous absorbing material. For example, the additives, coatings, finishes, particles, or fibers may be silver-based and/or copper-based. An antimicrobial agent may be a silver ion-based polymer system or one based on quaternary ammonium silane chemistry.

One or more fibrous portion (or any other portion of the material) may include a plurality of bi-component fibers. The bi-component fibers may be a thermoplastic lower melt bi-component fiber. The bi-component fibers may have a lower melting temperature than the other fibers within the mixture (e.g., a lower melting temperature than common or staple fibers). The bi-component fibers may be air laid or mechanically carded, lapped, and fused in space as a network so that the fibrous absorbing material or a portion thereof may have structure and body and can be handled, laminated, fabricated, installed as a cut or molded part, or the like to provide desired properties. The bi-component fibers may include a core material and a sheath material around the core material. The sheath material may have a lower melting point than the core material. The sheath material may have a melting point of about 90°C or greater, about 100 °C or greater, about 110°C or greater, or about 120 °C or greater. The sheath material may have a melting point of about 300°C or less, about 250°C or less, or about 200°C or less. The web of fibrous material may be formed, at least in part, by heating the material to a temperature to soften the sheath material of at least some of the bi-component fibers.

The bi-component fibers may be selected to provide the necessary attachment to other fibers in the fibrous portion at a node or connection point. The strength of the nodes or connection points may impact the resilience, reusability, washability, durability, cushioning, comfort, or a combination thereof to the wearer. The amount, denier, length, and/or type of bi-component fiber may be selected based on the desired connections between fibers.

The strength of the connection between fibers may allow for the structure to be generally open and permeable while also having sufficient mechanical integrity despite the open structure. Therefore, binders and/or fibers (e.g., bi-component fibers) and/or amounts may be selected to provide the greatest degree of structural openness while maintaining a structure capable of withstanding loads applied associated with the product's intended use.

The bi-component fiber may be present in the fibrous portion in an amount of about 100 percent by weight or less, about 80 percent by weight or less, about 60 percent by weight or less, about 50 percent by weight or less, about 40 percent by weight or less, about 30 percent by weight or less, about 25 percent by weight or less, or about 15 percent by weight or less. For example, the fibrous portion may include about 25 percent by weight to about 35 percent by weight (e.g., about 30 percent by weight) bi-component fiber. The fibrous portion may include about 65 percent by weight to about 75 percent by weight non-bi-component fiber (e.g., a polyester fiber).

The bi-component fiber may have an average denier of about 0.5 denier or greater, about 1 denier or greater, about 1.5 denier or greater, or about 2 denier or greater. The bi-component fiber may have an average denier of about 15 denier or less, about 12 denier or less, about 10 denier or less, about 6 denier or less, or about 4 denier or less.

The average length of the bi-component fiber may be about 75 mm or less. The average length of the bi-component fiber may be about 10 mm or more, about 20 mm or more, about 30 mm or more, about 40 mm or more, or about 50 mm or more. The average length of the bi-component fiber may be similar to the length of the staple fibers (e.g., about 50 mm to about 75 mm).

While specifically referring to bi-component fibers in the preceding paragraphs, it is contemplated that monofilament fibers may be used having comparable denier, fiber length, and/or percent by weight within the fibrous portion.

The bi-component fiber may have a polyester core. For example, the core may be polyethylene terephthalate (PET); polybutylene terephthalate (PBT), polytrimethylene terephthalate (PTT), or a combination thereof. The bi-component fiber may have a co-polyester sheath. For example, the sheath may be co-PET.

The fibrous portion (or any other portion of the fibrous absorbing material) may include a binder or binder fibers. The binder may include the bi-component fibers. The binder may be the bi-component fibers. The binder may exclude the bi-component fibers. The binder may include monofilament fibers. Binder may be present in the fibrous portion in an amount of about 100 percent by weight or less, about 80 percent by weight or less, about 60 percent by weight or less, about 50 percent by weight or less, about 40 percent by weight or less, about 30 percent by weight or less, about 25 percent by weight or less, or about 15 percent by weight or less. The fibrous portion may be substantially free of binder. The fibrous portion may be entirely free of binder. While referred to herein as fibers, it is also contemplated that the binder could be generally powder-like, spherical, or any shape capable of being received within interstitial spaces between other fibers and capable of binding the fibrous portion together.

The binder may have a softening and/or melting temperature of about 70 °C or greater, about 100 °C or greater, about 110 °C or greater, about 130 °C or greater, 180 °C or greater, about 200 °C or greater, about 225 °C or greater, about 230 °C or greater, or even about 250 °C or greater. For example, the binder may have a softening and/or melting temperature between about 70 °C and about 250 °C (with any range therein being contemplated). The fibers may be high-temperature thermoplastic materials. The fibers may include one or more of polyamideimide (PAI); high-performance polyamide (HPPA), such as Nylons; polyimide (PI); polyketone; polysulfone derivatives; polycyclohexane dimethyl-terephthalate (PCT); fluoropolymers; polyetherimide (PEI); polybenzimidazole (PBI); polyethylene terephthalate (PET); polybutylene terephthalate (PBT); polyphenylene sulfide; syndiotactic polystyrene; polyetherether ketone (PEEK); polyphenylene sulfide (PPS), polyether imide (PEI); and the like. The fibrous portion may include polyacrylate and/or epoxy (e.g., thermoset and/or thermoplastic type) fibers. The fibrous portion may include a multi-binder system. The fibrous portion may include one or more elastomeric fiber materials acting as a binder. The fibrous portion may include one or more sacrificial binder materials and/or binder materials having a lower melting temperature than other fibers within the portion.

The fibrous absorbing material may be formed of a plurality of layers, including one or more wicking layers, one or more outer layers, one or more facing layers, one or more backing layers, one or more contact layers, one or more skin layers, and/or one or more fibrous layers or fibrous portions, in any combination and in any order. Some layers may serve multiple purposes (e.g., a layer may be a wicking layer, an outer layer, a facing layer, and/or a contact layer at the same time). While referred to as "layers," it is contemplated that this includes discrete layers or portions within one or more materials. For example, a two layer material may include two discrete layers or a single material having two different portions. The fibrous absorbing material may include two or more fibrous layers. The fibrous absorbing material may include one or more lofted layers, one or more wicking layers, or both. A skin layer may be formed by melting a portion of the layer by applying heat in such a way that only a portion of the layer, such as the top surface, melts and then hardens to form a generally smooth surface. A scrim may be applied or secured to one or more fibrous layers. The fibrous absorbing material may include a plurality of layers, some or all of which serve different functions or provide different properties to the fibrous absorbing material. The ability to combine layers having different properties may allow the fibrous absorbing material to be customized based on the application. For example, the layers may be combined so that the layered material is fibrous absorbing material that is moisture wicking, moisture transferring, insulative, cooling, has low drying times, or a combination thereof. The layers may be combined so that the fibrous absorbing material provides cushioning with high resilience.

The fibrous absorbing material may include one or more wicking layers. A wicking layer may be formed from a nonwoven material, a woven material, a knit material, a meltblown material (e.g., of thermoplastic polyurethane), or the like. One or more wicking layers may include synthetic fibers. One or more wicking layers may be made from Lycra, polyester, polyethylene terephthalate, or a combination thereof. For example, a wicking layer may be a polyethylene terephthalate (PET) jersey knit material. One or more wicking layers may include natural fibers. Natural fibers may include, but are not limited to, bamboo, wool, rayon, the like, or a combination thereof.

A wicking layer may draw moisture in vapor form away from the source. For example, a wicking layer may pull perspiration vapor away from a wearer before the perspiration becomes liquid sweat. A wicking layer may assist in or facilitate direction of vapor out of the article, such as a wearable article (e.g., via one or more air flow channels).

A wicking layer or other portion contacting the surface having or producing moisture may have a generally flat or generally smooth surface. A wicking layer or other portion contacting the surface having or producing moisture may have a textured surface, such as a corduroy surface or a surface having a plurality of channels, undulations, or areas of varying thickness. A wicking layer or other portion contacting the surface having or producing moisture may have a frictional surface, such that the article does not slide, rub, or move while worn.

The fibrous absorbing material may arrange layers based on its hydrophilic properties. Layers may be arranged from least hydrophilic to most hydrophilic. The least hydrophilic layer may be arranged or positioned adjacent the source of moisture. Such arrangement may create a driving force toward the most hydrophilic layer, thereby drawing moisture away from the surface of the material closest to the source of the moisture.

The layers may be arranged from least hydrophilic to most hydrophilic, with each layer more hydrophilic than the one adjacent through the thickness of the fibrous absorbing material. Some layers within the fibrous absorbing material may have the same hydrophilicity. Layers of higher hydrophilicity may flank a layer of lower hydrophilicity. Layers of lower hydrophilicity may flank a layer of higher hydrophilicity.

For example, an A-surface facing material (e.g., a facing layer in contact with a user's skin) may be less hydrophilic than the fibrous portion. While considered less hydrophilic, it may still be hydrophilic, such that moisture is wicked from the A-surface facing into the fibrous portion. A B-surface facing material may be located on the opposing side of the fibrous portion. The B-surface facing material may be more hydrophilic than the fibrous portion. This may create a pulling force and/or driving force to enhance moisture movement through the layers and/or the entire material (e.g., generally in the thickness direction).

Where the fibrous absorbing material has a hydrophilic material opposite the surface facing the source of the moisture (e.g., the B-surface facing material), it is contemplated that the hydrophilic material and/or facing may include absorbent fibers. Absorbent fibers mat include viscose fibers, superabsorbent fibers (SAF), or other fibers having hydrophilic properties. The facing material and/or its fibers may absorb about 10 times g/g or greater or about 15 times g/g or greater. The facing material and/or its fibers may absorb about 40 times g/g or less, or about 30 times g/g or less. For example, the facing material and/or its fibers may absorb about 15 to about 30 times g/g. The facing material may be formed using nonwoven manufacturing technologies, such as needlepunch, spunlace, and/or wet laid processes.

The fibers of the fibrous portion may be generally vertical relative to the A-surface facing material. The fibers of the fibrous portion may be generally vertical relative to the A-surface facing material about 30% into the thickness of the material or less.

The fibers of the fibrous portion may be generally vertical relative to the B-surface facing material. The fibers of the fibrous portion may be generally vertical relative to the B-surface facing material about 30% into the thickness of the material or less.

The fibers of the fibrous portion may be generally vertical between opposing loops. The fibrous portion may include one or more generally compressed portions. The generally compressed portion may be located between the A-surface facing material and B-surface facing material. The generally compressed portion may be closer to the A-surface facing material. The generally compressed portion may be closer to the B-surface facing material.

While the example includes an A-surface facing material, a fibrous portion, and a B-surface facing material, it is contemplated that additional layers may be incorporated therebetween or on the outer surfaces of the facings. The A-surface facing material, B-surface facing material, or both may be outermost layers. One may be an outermost layer. Neither may be outermost layers, where the A-surface material and the B-surface material are positioned between other materials, such that neither are in direct contact with a source of moisture, such as skin.

A coating may be applied to one or more portions or layers of the fibrous absorbing material. For example, a coating may be applied to form one or more surface layers on the fibrous portion. The coating may improve one or more characteristics of the fibrous absorbing material. For example, the surface layers may be anti-microbial, anti-fungal, have high infrared reflectance, moisture resistant, mildew resistant, or a combination thereof. The surface layers may be an extension of the fibrous portion or wicking layer. At least some of the surface layers may be metalized. For example, fibers along an outer surface of the fibrous layers or wicking layers may form the surface layers. Metallization processes can be performed by depositing metal atoms onto the fibers of the surface layers. As an example, metallization may be established by applying a layer of silver atoms to a surface layers or as a surface layer. Metalizing may be performed prior to the application of any additional layers to the fibrous layers.

The metallization may provide a desired reflectivity or emissivity. The surface layers may be about 50% IR reflective or more, about 65% IR reflective or more, or about 80% IR reflective or more. The surface layers may be about 100% IR reflective or less, about 99% IR reflective or less, or about 98% IR reflective or less. For example, the emissivity range may be about 0.01 or more or about 0.20 or less, or 99% to about 80% IR reflective, respectively. Emissivity may change over time as oil, dirt, degradation, and the like may impact the fibers in the application.

Other coatings may be applied to the fibrous portion or another portion of the fibrous absorbing material to form the surface layers, metallized or not, to achieve desired properties. Hydrophilic coatings or treatments may be added. Oleophobic and/or hydrophobic treatments may be added. Flame retardants may be added. A corrosion resistant coating may be applied to the metalized fibers to reduce or protect the metal (e.g., aluminum) from oxidizing and/or losing reflectivity. IR reflective coatings not based on metallization technology may be added. Anti-microbial or anti-fungal coatings may be applied. For example, silver powder or other antimicrobial nano-powders can be added into a portion of the fibrous layers to form the surface layers.

The fibrous absorbing material or portions thereof may be formed into a generally flat sheet. The fibrous absorbing material or parts thereof (e.g., as a sheet) may be capable of being rolled into a roll. The fibrous absorbing material may be a continuous material so that longer lengths can be employed in a single piece. The fibrous absorbing material (or one or more portions of the fibrous absorbing material) may be an engineered 3D structure. It is clear from these potential layers that there is great flexibility in creating a material that meets the specific needs of an end user, customer, installer, and the like.

The fibrous layers, the wicking layers, the surface layers, or a combination thereof may be directly attached to one another. One or more layers or portions may be attached to another by a laminating process. The one or more layers or portions may then be supplied as a roll or a sheet of the laminated product. The one or more layers, therefore, may be attached to each other prior to any additional shaping or molding steps. The one or more layers may include a thermoplastic component (e.g., binder or fibers) that melt and bond to an adjacent surface upon exposure to heat. One or more layers or portions may be attached to each other with an adhesive layer. The adhesive layer may be an adhesive. The adhesive may be a powder or may be applied in strips, sheets, or as a liquid or paste. The adhesive layer may extend along a surface of the fibrous layers, the wicking layers, the surface layers, or a combination thereof, to substantially cover the surface. The adhesive layer may be applied to a portion of the surface of the fibrous layers, the wicking layers, the surface layers, or a combination thereof. The adhesive layer may be applied in a pattern (e.g., dots of adhesive applied to the surface). The adhesive layer may be applied in a uniform thickness. The adhesive layer may have varying thickness. The adhesive layer may be a single layer (e.g., a single adhesive). The adhesive layer may be multiple layers (e.g., an adhesive layer and a thermoplastic fiber layer). The adhesive layer may be a single layer of blended materials (e.g., an adhesive and thermoplastic fibers are blended in a single layer).

The layers or portions may be directly attached to each other via other processes, such as by sewing, entanglement of fibers between layers, sealing, or other methods. The edges of the layers or portions may be sewn together. One or more layers may be sealed at the edges. For example, the outer layers (e.g., the wicking layers) may be sealed at the edges to encapsulate the interior layers, such as one or more fibrous portions. The layers may be heated and/or compressed to seal all of the layers together. For example, heated pinch edge sealing may bond the layers together. A double die system may be used, where the central portion of each die is insulated so as not to burn or melt the body of the material, and the edges of the dies are heated and pinched together such that the edges are sealed and the body of the material remains lofted. The thickness at this pinched edge may be about 3 mm or less, about 2 mm or less, or about 1 mm or less and greater than 0 mm. One or more layers or one or more edges may be ultrasonically sealed. The edge may be trimmed or cut after heating, compressing, pinching, sealing, the like, or combination thereof.

One of more of the portions of the fibrous absorbing material may have hydrophobic properties. One or more of the portions of the fibrous absorbing material may have hydrophilic properties. Entire layers may be hydrophobic or hydrophilic. A layer may have both hydrophobic and hydrophilic properties. For example, a layer may be formed from a mixture of hydrophobic fibers and hydrophilic fibers. The interfaces between layers may include one hydrophobic layer or portion abutting a hydrophilic layer or portion. The portion contacting the source of the moisture may be hydrophilic. Such layer may cause moisture to wick away from the skin and distribute the moisture over a larger area to quicken the wicking. Adjacent layers may, for example, be hydrophobic. This may assist in the drying of the material and/or resisting the uptake of moisture from the external environment. It is also possible that a hydrophobic layer or portions thereof may function to draw moisture away from a surface (e.g., a user's skin) while absorbing little to no moisture, thereby acting to wick away the moisture. The hydrophobic layers or portions thereof may function to transfer moisture to another layer of the fibrous absorbing material. The hydrophilic layers or portions thereof may function to absorb moisture (e.g., from one or more hydrophobic layers or portions). Fibers within the layers may be hydrophobic. Fibers within the layers may be hydrophilic.

Fibers of one or more portions of the fibrous absorbing material, or one or more portions of the fibrous absorbing material, may exhibit antimicrobial properties. The fibers may be treated with an antimicrobial substance. For example, silver or copper may be used. Fibers may be coated with silver, copper, or a combination thereof. The antimicrobial substance may be otherwise deposited on the surface of the fibers (e.g., via sputtering, electrostatic deposition). The antimicrobial substance may be part of the fibers. For example, silver particles, copper particles, or both, may be within fibers of the one or more layers of the fibrous absorbing material. Fibers may be coated with or include chitosan. For example, fibers may be coated with a liquid chitosan formulation such as Tidal-Tex^{™} base formula from Tidal Vision Products, Inc., in Bellingham, Washington. Fibers may be coated with or be infused with one or more essential oils. Examples of essential oils include but are not limited to tea tree, eucalyptus, peppermint, cinnamon, clove, lemon, lemongrass, thyme, oregano, citronella, sage, or a combination thereof. Fibers may be coated with or include active enzymes. Fibers may be coated with one or more agents, such as those supplied by Envera^{®} from West Chester, Pennsylvania.

The fibrous absorbing material disclosed exhibits breathability or permeability of fluids (e.g., air, liquid, such as water or sweat). This may increase comfort to the wearer. This may allow for an increased drying time of the material and/or portions thereof (e.g., creating a feeling of being dry to the touch, even if the entirety of the material is not yet completely dry) and/or increased cooling of the surface of the source of the moisture. With the ability for air to permeate the material, this decreases the drying time of at least a portion of the material (e.g., the portion of the material facing or in contact with the wearer or user) and/or the entirety of the material. Breathability and/or permeability of the material may decrease the formation of mold, mildew, and/or odors.

The fibrous absorbing material, or one or more layers thereof, may exhibit a permeability at 100 Pa of about 600 liters per square meter per second (L/m²/s) or greater, about 700 L/m²/s or greater, or about 800 L/m²/s or greater. The fibrous absorbing material, or one or more layers thereof, may exhibit a permeability of about 1500 L/m²/s or less, about 1200 L/m2/s or less, or about 1000 L/m²/s or less. This is a significant improvement over other traditional materials. In comparison to polyurethane foams at a comparable thickness, the fibrous absorbing material, or one or more layers thereof, will be more permeable than the polyurethane foam. For example, a polyurethane memory foam at 1100 g/m² at 15 mm thickness exhibits a permeability of about 500 L/m²/s. An open cell polyurethane foam material at 600 g/m² at 20 mm thickness can exhibit a permeability of less than about 100 L/m²/s. A two-layered foam formed of an ethylene vinyl acetate foam layer at 10 mm thickness and polyurethane foam layer 2 mm thickness at 1100 g/m² total exhibits no permeability.

The fibrous absorbing material or one or more portions thereof (e.g., fibrous portion) may be formed to have a thickness and density selected according to the required physical, insulation, moisture absorption/resistance, and air permeability properties desired of the finished layers (and/or the fibrous absorbing material as a whole). The portions of the fibrous absorbing material may be any thickness depending on the application, location of installation, shape, fibers used, fiber geometry and/or orientation, lofting of the fibrous layers, or other factors. The density of the layers may depend, in part, on the specific gravity of any additives incorporated into the material comprising the layer (such as nonwoven material), and/or the proportion of the final material that the additives constitute. The fibrous absorbing material may have a varying density and/or thickness along one or more of its dimensions. Bulk density generally is a function of the specific gravity of the fibers and the porosity of the material produced from the fibers, which can be considered to represent the packing density of the fibers.

The fibrous absorbing material, or portions thereof, may be formed through one or more lamination techniques, or another technique capable of joining two or more layers together. The two or more layers or portions may then be supplied as a roll or a sheet of the laminated product. The two or more layers, therefore, may be attached to each other prior to any additional shaping or molding steps.

The fibrous portion, the fibrous absorbing material, or both, may be a thermoformable material, which indicates a material that may be formed with a broad range of densities and thicknesses and that contains a thermoplastic and/or thermoset binder. The thermoformable material may be heated and thermoformed into a specifically shaped thermoformed product. The fibrous absorbing material may have a varying thickness (and therefore a varied or non-planar profile) along the length of the material. Areas of lesser thickness may be adapted to provide controlled flexibility to the material, such as to provide an area with additional flexibility and elasticity, such as to form a stretchable compression article of clothing. The fibrous absorbing material may be shaped (e.g., by folding, bending, thermoforming, molding, and the like) to produce a shape generally matching a desired shape for a given application. Shaping, alone or in combination with thermoforming, may be performed by die-cutting or other cutting methods. The finished fibrous absorbing material may be fabricated into cut-to-print two-dimensional flat parts depending on the desired application. The fibrous absorbing material may be formed into any shape. For example, the fibrous absorbing material may be molded (e.g., into a three-dimensional shape) to generally match a desired shape. The finished fibrous absorbing material may be molded-to-print into a three-dimensional shape for a desired application.

The fibrous absorbing material may act to absorb moisture, such as perspiration. The fibrous absorbing material may allow for evaporation of the moisture. Evaporation may occur while the article is being worn, when the article is not being worn, or both. The fibrous absorbing material may direct moisture toward areas of the material located at or near an air vent or near an area with air flow. It is contemplated that at or near areas adjacent an air vent, the material may have a faster evaporation rate. It is possible that areas exposed to the greatest air flow may dry faster or may exhibit a higher rate of evaporation than areas not exposed to as much air flow. The material, in that location, may be drier than other portions of the material. The material may then pull more moisture toward the drier areas, thereby increasing and expediting evaporation.

Through and between any of the portions or layers of the fibrous absorbing material, moisture may travel in any direction. Moisture may move vertically in the thickness direction. Moisture may move in the length and/or width direction. Moisture may travel at any angle between vertical and horizontal, relative to the thickness direction. Moisture may travel at any angle between the length direction and the width direction relative to the longitudinal axis of the layered material. Moisture may travel to areas having less moisture present (e.g., areas at or near an area of air flow). Moisture may travel generally linearly. Moisture may travel in a non-linear direction or in multiple directions.

Moisture may travel across and/or along the fibers of one or more fibrous layers. Moisture may travel in the direction of the fibers. Moisture may travel in the thickness direction in areas between loops of the lapped structure. Moisture may travel in the generally longitudinal direction at areas of loops of the lapped structure. Moisture may travel across loops (e.g., from one loop to an adjacent loop via fibers extending between the two).

The direction of fibers and/or loops may be positioned to more efficiently direct the flow of moisture within the material. Moisture may travel longitudinally along the general direction of fiber orientation within the structure. Where fibers are generally oriented in the machine direction, an optimized arrangement may orient the fibers toward the open areas or areas of increased air flow.

Air may cycle through the fibrous material during periods of compression and release of the material. As a load is applied and the fibrous material compresses, air is forced out of the material. When the load is released and the fibrous material returns to an uncompressed or less compressed state, air may be pulled back into the fibrous material. Air may fill the interstitial spaces in the fibrous material. This cyclic or periodic load and release may create a pumping effect where air is forced or squeezed out of the pad material and then returns to the fibrous material. Air may be pulled back into the structure (e.g., via a vacuum effect) as the fibrous material returns to an uncompressed or less compressed state. This pumping action may increase the air flow within the material. This pumping action may provide a cooling effect to the wearer. As humid air or vapor is pushed out of the material, less humid air may cycle in when the pad material returns to an uncompressed or less compressed state. This may help to exchange warmer and/or more humid air for cooler and/or less humid air as the periodic load cycle continues.

There may be a desired directionality to the air flow. It is possible that air or vapor may preferentially enter or exit the fibrous material at or near the least obstructed portion, such as an edge. For example, in a backpack, the air or vapor may have a preference for exiting the material at the sides of the back contact portion, at the sides or edges of the backpack straps, or both. In an article of footwear, for example, the air or vapor may have a preference for exiting the material at or around the collar or at or around one or more openings or vents in the article of footwear.

It is contemplated that there may be exchange of air and/or vapor through the fibrous material upon exposure to a source of air and/or exposure to ambient temperatures. Warmer air or vapor within the fibrous material may have a tendency to escape the fibrous material for areas of less humidity or less heat. There may be an air exchange effect within the material as humid air and/or vapor exchanges with less humid air in the atmosphere or from a source of air, such as a fan, wind, or air flow due to movement of the user while using the fibrous material.

Air flow may be increased or enhanced by one or more air flow channels in the fibrous absorbing material. Air flow may provide cooling to the wearer. Air flow may enhance evaporation of moisture. Air flow may assist in distributing any moisture or vapor within and outside the article (e.g., the wearable article). An air flow channel may be part of or formed in an outermost portion of the fibrous absorbing material, such as a facing layer or wicking layer.

An air flow channel may extend across a surface of the fibrous absorbing material. An air flow channel may extend generally parallel to a surface of the fibrous absorbing material. An air flow channel may extend through the thickness of the fibrous absorbing material. An air flow channel may extend through a portion of the thickness of the fibrous absorbing material. An air flow channel may extend generally perpendicularly to a surface of the fibrous absorbing material. An air flow channel may be a portion of material removed from the fibrous absorbing material. An air flow channel may be formed by adding material to the fibrous absorbing material in certain places (e.g., by adding two or more ribs forming a channel therebetween). An air flow channel may be formed as a result of one or more processing steps. An air flow channel may be formed between two adjacent loops of a vertically lapped fibrous portion. An air flow channel may be formed via one or more localized compression operations. An air flow channel may be formed via one or more stitching operations. An air flow channel may be formed due to a material itself. For example, a textured contact surface (e.g., a corduroy pattern with raised cords or wales and a base fabric or material therebetween forming channels) may have channels formed therein.

The air flow channels may be uniformly distributed across all or a portion of the fibrous absorbing material. The air flow channels may be located only in certain areas. One air flow channel may be generally parallel to another air flow channel. One air flow channel may be at an angle relative to another air flow channel. Two or more air flow channels may intersect. One or more air flow channels may be generally linear. One or more air flow channels may be generally non-linear (e.g., having one or more curves or angles).

Variations in topography, which may form one or more air flow channels, of one or more layers or portions may be due to one or more operations performed upon the material or due to the material itself. Variations in topography may result in variations of thickness through the fibrous absorbing material or one or more portions thereof. For example, variations in topography may be formed by compression, stitching, or features of the material itself. Variations in topography may be formed via one or more shaping, thermoforming, or molding operations. These variations in topography may provide increased surface area exposed to air flow. For example, channels may be formed via compression, stitching, or textured material. Channels may be formed during one or more shaping operations, such as thermoforming to create a three-dimensional structure. Such channels may permit air flow between the article and the fibrous absorbing material. Such channels may permit air flow between the wearer and the article and/or fibrous absorbing material. Increased air flow may provide cooling effects, increased evaporation of moisture, or both. Stitching, localized compression, or texture of the material may allow for tunability of the material to provide desired properties, such as flexibility, fiber orientation, direction of moisture travel, density, air flow, and the like.

One or more layers (or the layered material in its entirety) may undergo one or more compression operations. Compression may be areas of localized compression, such that the entirety of the material is not compressed. Compression may be areas of localized compression such that certain areas are compressed more than others. For example, areas of localized compression may be in lines across at least a portion of the surface of the fibrous absorbing material or one or more layers or portions thereof. Localized compression may be via application of heat, pressure, or both. One or more layers or portions may be compressed during the compression operation. This may provide indentations within one or more of the layers to form channels, grooves, or other depressions. Localized compression may secure one or more layers or portions together (e.g., via application of heat and pressure, causing one or more layers to melt and/or activate and adhere to an adjacent layer). Areas of localized compression may extend across at least a portion of the surface of one or more layers or portions. For example, localized compression may be one or more, two or more, or a plurality of lines extending from one edge of the fibrous absorbing material to another edge. The areas of localized compression, such as lines, may begin and/or terminate at distance from the edge so it does not extend the entirety of the length or width of the surface of the layer or surface of the fibrous absorbing material. Lines formed via localized compression may be generally parallel to an axis of the article. Lines formed via localized compression may be generally perpendicular to an axis of the article. Lines formed via localized compression may be generally parallel to the direction of loops of the fibrous portion. Lines formed via localized compression may be generally perpendicular to the direction of loops of the fibrous portion. Lines formed via localized compression may be at an angle between parallel and perpendicular with the direction of loops of the fibrous portion. Lines formed via localized compression may be generally parallel to each other. Lines formed via localized compression may be an angle between parallel and perpendicular to each other or to another axis of the material. One or more lines formed via localized compression may be at an angle (i.e., nonparallel) relative to another line formed via localized compression. Lines formed via localized compression may intersect (e.g., forming diamonds, triangles, squares, or other polygonal shapes). Other shapes are also contemplated via localized compression, such as a zig zag pattern, dashes, spots, or the like. The number and configuration of areas of localized compression may be selected to tune the performance of the material. The configuration of areas of localized compression may be selected to provide a desired flexibility to the material in certain areas. The areas of localized compression may be generally evenly distributed over the area of the layer or layers. The areas of localized compression may be unevenly distributed, such that certain areas have more areas of localized compression. This may act to increase the density at certain areas of the fibrous absorbing material, increase air flow at certain areas of the fibrous absorbing material, impact flexibility at certain areas of the fibrous absorbing material, or a combination thereof.

Stitching may be performed instead of or in addition to localized compression. Stitching may have the same or similar functions as would providing localized compression. Stitching may act to secure two or more layers or portions together. The stitching may extend through one or more of the layers of the fibrous absorbing material. Stitching may extend through the entirety of the fibrous absorbing material. Stitching may extend partially through the fibrous absorbing material. Stitching may be visible on one or both outermost surfaces of the fibrous absorbing material. For example, stitching may be in lines across at least a portion of the surface of the fibrous absorbing material or one or more layers thereof. Stitching may also act to compress one or more layers or portions in the areas of the stitching. The stitches within one or more of the layers may form channels, grooves, or other depressions. Stitching may extend across at least a portion of the surface of one or more layers. For example, stitching may form one or more, two or more, or a plurality of lines extending from one edge of the fibrous absorbing material or portion thereof to another edge. The number and configuration of stitches or lines formed via stitching may be selected to tune the performance of the material. The configuration of stitches may be selected to provide a desired flexibility to the material in certain areas. The stitches may be generally evenly distributed over the area of the layer or layers. The stitches may be unevenly distributed, such that certain areas have more areas of stitching than others. This may act to increase the density at certain areas of the fibrous absorbing material, increase air flow at certain areas of the fibrous absorbing material, impact flexibility at certain areas of the fibrous absorbing material, or a combination thereof. The stitching and/or lines may begin and/or terminate at distance from the edge so it does not extend the entirety of the length or width of the surface of the layer or does not extend all the way to the edge of the material. Lines formed via stitching may be generally parallel to an axis of the article. Lines formed via stitching may be generally perpendicular to an axis of the article. Lines formed via stitching may be generally parallel to the direction of loops of the fibrous layer. Lines formed via stitching may be generally perpendicular to the direction of loops of the fibrous layer. Lines formed via stitching may be at an angle between parallel and perpendicular with the direction of loops of the fibrous layer. Lines formed via stitching may be generally parallel to each other. Lines formed via stitching may be an angle between parallel and perpendicular to the longitudinal axis. One or more lines formed stitching may be at an angle (i.e., nonparallel) relative to another line formed via stitching. Lines formed via stitching may intersect (e.g., forming diamonds, triangles, squares, or other polygonal shapes). Other shapes are also contemplated via stitching, such as a zig zag pattern, curved patterns, dashes, spots, or the like.

The fibrous absorbing material may have one or more otherwise textured surfaces (e.g., a plurality of ribs, cords, or wales), raised surfaces, or voids in or across the material. The texture may create channels or undulations in a surface of the material. The texture may provide projections as opposed to or in addition to indentations. The direction of the texture, ribs, cords, wales, or the like may extend in any direction that provides air flow or in any direction as described herein pertaining to localized compression or stitching. The direction of texture, ribs, cords, wales, or the like may extend generally parallel to the direction of loops of the fibrous portion (where the direction of loops is parallel to a line extending across an entire peak or valley or a crest or trough of a loop), generally perpendicular to the direction of loops of the fibrous portion, or any direction therebetween. The texture, ribs, cords, wales, or the like may extend through the entirety of the thickness of the fibrous absorbing material. The texture, ribs, cords, wales, or the like may extend only partially though the thickness of the fibrous absorbing material. The texture, ribs, cords, wales, or the like may only be present on or in a single layer of the material. The texture, ribs, cords, wales, or the like may be generally evenly distributed across the entire surface of the layer or layers. The texture, ribs, cords, wales, or the like may be concentrated in certain areas or may have a non-even distribution. The distribution may increase air flow at certain areas of the material, impact flexibility at certain areas of the layered material, or a combination thereof.

The fibrous absorbing material may exhibit improved compressive strength (e.g., as compared to a polyurethane foam). As the fibrous absorbing material is compressed, the compressive strength may increase. Upon performance of a compression force deflection test under ASTM D3574-3-C, the fibrous absorbing material may be capable of withstanding loads of about 10 kPa or greater, about 15 kPa or greater, about 20 kPa or greater, about 23 kPa or greater, about 25 kPa or greater, or about 27 kPa or greater. The fibrous absorbing material may gently deform at the outset of an application of load (e.g., having a displacement of about 2 mm or greater, or about 3 mm or greater), providing a soft touch. The fibrous absorbing material may then rapidly increase in strength, such that as displacement increases, the load also increases.

The fibrous absorbing material may provide cushioning while also providing moisture wicking, evaporation, thermal insulation, or the like. The fibrous absorbing material, or portions thereof, may exhibit resilience. Resilience may be at least in part due to the orientation of the fibers, geometry of the fibers, denier of the fibers, composition of the fibers, strength of the connection points of the fibers (e.g., at the nodes or connection points between two joined fibers) the like, or a combination thereof. Resilience may be measured using a standardized compression force deflection or indentation force deflection test (e.g., ASTM D3574). The desired resilience may depend upon the application within which the layered material is used. The fibrous absorbing material may have a resilience suitable for its intended purpose.

During use, it is contemplated that the structure will be required to compress upon applications of certain loads. The compression upon application of a load may provide the cushioning effect of the material. The compression and response upon removal of the load may be tuned for the intended loads experienced. In certain applications, it may be preferred that the deflection does not occur too easily, but also does not occur with too much difficulty. This may be tuned, for example, by selections of fibers, fiber orientation, or both.

It may be preferred to have a spring-like response where the load-deflection curve is approximately linear (e.g., as compared to a response where there is an instability, such as buckling, which would produce a non-linear load-deflection response). It may be important to consider fiber orientation relative to the direction of the load applied to avoid instabilities such as buckling. A load applied at the same angle as the fiber orientation may cause buckling of the fibers and/or the structure. For example, where a load is applied perpendicular to the surface of the fibrous absorbing material, it may be desirable to provide a fiber orientation that is not exactly 90 degrees. It is contemplated that a more random three-dimensional nonwoven structure may produce something that has less likelihood of having a nonlinear load-deflection response.

It may be desirable to reduce or avoid compression set of the fibrous absorbing material. Avoiding or reducing compression set may allow the material to be reusable, extend the lifespan of the material, provide requisite cushioning, or a combination thereof. Compression set may occur in a material, for example, because of breakage and/or viscoelastic response of the joints. The fused points between fibers (e.g., between a bi-component fiber and a staple fiber, between bi-component fibers or both) may have sufficient strength that application of high loads, repeated application of pressure, repeated use, repeated wash cycles, or a combination thereof does not destroy the fusion.

Compression set may be avoided or reduced by providing sufficient connection points between fibers. An increased number of connection points may act to distribute the loads or pressure applied to the material, thereby putting less stress on each node or connection point. Connection points may be increased, for example, by having fibers of a smaller average fiber diameter (e.g., to allow for more fibers to be present within the material, thereby increasing the likelihood of fibers contacting each other). Connection points may be increased by providing a higher weight percentage loading of bi-component fibers or binder within the material. With more fibers capable of softening and bonding to an adjacent fiber, this may increase the number of connection points within the material. When the distance between connection points is greater, this may lead to less resilience of the material than if the connection points are closer together.

Fibers may be selected to reduce the stress on the connection points. Stiffer fibers in between joints may increase the stress on the joints. When a force is applied to a rigid fibers joined together, the joint is stressed, as the fibers are less likely to yield to the load. Stiffer fibers may increase compression set. Elastomeric fibers may be expected to stress the joints between fibers less, as the fibers have more give when a load is applied. Thinner diameter fibers may be less rigid and/or more flexible, which may reduce stress on the joints between fibers.

Bi-component fibers may be selected to reduce the compression set and/or strengthen the joints between two fibers. The bi-component fibers may be selected to avoid or reduce creep when subjected to persistent stresses. The sheath material of the bi-component fiber may be selected based on its softening point. For example, a higher softening point sheath material may be less resistant to creep. The molecular weight of the sheath material of the bi-component fiber may impact the likelihood of creep. For example, a lower molecular weight distribution of the sheath material may lead to greater creep likelihood.

Structures that produce improved compression set may be washable and/or reusable. A reusable material may be capable of withstanding repeated use, without requiring disposal. A reusable material is not a single-use article. The reusable article may be capable of withstanding normal, intended use over a period of time. For example, a fibrous material may be used in a backpack, shoe, garment, article of headwear, vest, or the like, over the expected lifespan of the product.

A reusable material may be capable of being washed. Washable may include the ability to withstand repeated wash cycles in a washing machine. Washable may include the ability to withstand repeated hand washing cycles. Washable may include the ability to withstand 10 wash cycles or more, 20 wash cycles or more, 30 wash cycles or more, 40 wash cycles or more, or 50 wash cycles or more, where a wash cycle may be by hand, by machine, or by a combination thereof. A washable material may be capable of withstanding the wash cycles without degradation of the material. For example, about 50% of the connection points or greater, about 60% of the connection points or greater, about 70% of the connection points or greater, about 80% of the connection points or greater, about 90% of the connection points or greater, or about 100% of less of the connection points may still be intact after a predetermined number of wash cycles.

During a wash cycle, finishes on the fibers may have a tendency to come away from the fibers (e.g., into the water of the washing machine). However, it is contemplated that the finish may redeposit upon the material. The finish may have an affinity for the fibers and may reattach to the fibers or to the material. It is also contemplated that certain materials may have instructions for hand washing only to reduce the removal of finishes on the fibers.

The fibrous absorbing material as described herein may provide for three-dimensional active wicking and evaporation of moisture. This may be achieved by vertical wicking (e.g., wicking away from the source of moisture), transverse wicking (e.g., wicking along the fibrous absorbing material in a direction generally transverse to the thickness direction), one or more extended portions, or a combination thereof.

The fibrous absorbing material may be positioned adjacent a surface having or producing moisture. The fibrous absorbing material may be positioned in direct contact (e.g., direct planar contact) with a surface having or producing moisture. The surface having or producing moisture may be, for example, skin, hair, or clothing that may be moistened or saturated (e.g., due to perspiration, moisture from external conditions such as rain, or moisture upon encountering natural features such as lakes, streams, rivers, areas of flooding, or the like).

The fibrous absorbing material may be located between the surface having or producing moisture and another surface (also referred to herein as an opposing surface). The other surface may, for example, be a part of the article to which the fibrous absorbing material is secured. For example, the opposing surface may be a rigid shell for a protective material. The opposing surface may be a portion of a backpack or other accessory where cushioning, padding, moisture wicking, moisture evaporation, or a combination of is desirable. The other surface may have one or more openings for providing additional air flow to the wearer, to the fibrous absorbing material, or both. The openings may be defined by one or more edges.

The fibrous absorbing material may wick moisture away from the surface having or producing moisture. A direction of wicking may be generally perpendicular (e.g., 90° ± about 10° or ± about 15°) to a plane of the surface having or producing moisture. This may provide a cooling effect to the wearer, an insulating effect to the wearer, or both. This may remove the moisture from the surface and absorb the moisture within the fibrous absorbing material.

Moisture may be wicked first by the outermost material of the fibrous absorbing material that contacts the surface having or producing moisture. The outermost material may be permeable to fluids (e.g., air, vapor, liquid, or a combination thereof). The outermost material may be a moisture wicking material. Moisture may then be transferred to the fibrous portion of the fibrous absorbing material. Moisture may travel generally vertically along the fibers having a generally vertical orientation (e.g., in the thickness direction). Moisture may travel along fibers at one or more loops.

Upon absorption of moisture into the fibrous absorbing material, wicking may occur in a generally transverse direction relative to the vertical wicking, in a direction generally parallel to a plane of the surface having or producing moisture (e.g., having an angle of about 15° or less or about 10° or less with the plane of the surface), or both. Moisture may travel toward a portion of the fibrous absorbing material at or near one or more open surfaces or at or near a source of air flow. As evaporation may occur more quickly at or near an open surface or at or near a source of air flow, it is contemplated that moisture may travel to areas where there is less or no moisture. Evaporation of this moisture may then occur at those areas.

An open surface may be an area exposed to air flow (e.g., direct air flow). The open surface may be at or near an extended portion of the fibrous absorbing material. An extended portion may be a portion of the fibrous absorbing material that extends beyond the surface having or producing moisture. An extended portion may be a portion of the fibrous absorbing material that extends beyond the surface on the opposing side of the fibrous absorbing material as the surface having or producing moisture. An extended portion may extend beyond both the surface having or producing moisture and the opposing surface. The extended portion may extend beyond only one of the surface having or producing moisture and the opposing surface. The extended portion may extend into one or more openings of the opposing surface (e.g., the surface in contact with the fibrous absorbing material opposite the surface having or producing moisture). The extended portion may extend around an edge of another surface. For example, the extended portion may extend around an edge of a rigid shell. The extended portion may extend toward an area of air flow or increased air flow. As the rate of evaporation of the moisture within the fibrous absorbing material increases in areas of the material exposed to air flow or greater air flow, in having extended portions, thereby increasing the open surfaces or increasing surface area of the fibrous absorbing material exposed to air flow, moisture within the fibrous absorbing material may be increased as compared with the same fibrous absorbing material without the extended portion. With increased rate of evaporation also comes the ability to absorb more moisture from the surface having or producing moisture than a material that does not experience evaporation of the moisture as quickly.

The extended portion may be the same material and/or thickness as the body of the fibrous absorbing material (e.g., the fibrous portion or material located between the surface having or producing moisture and the opposing surface). The extended portion may be a different material and/or thickness as the body of the fibrous absorbing material. The extended portion may be compressed or further compressed as compared with the body of the fibrous absorbing material. The extended portion may be folded, bent, molded, or otherwise shaped to fit within or around an intended area. The extended portion may extend at an angle from the body of the fibrous absorbing material. The extended portion may extend generally parallel or coplanar with the body of the fibrous absorbing material. The extended portion may wrap around an edge of a surface, such that the extended portion may form an L shape, a J shape, or a C shape. The extended portion may be located at or near an edge of the fibrous absorbing material. The extended portion may be located between two body portions of the fibrous absorbing material.

The extended portion may be flexible. The extended portion may be positioned such that it is able to be adjusted. The extended portion may be removably secured to an article. For example, an end of the extended portion may be removably fastened, attached, or secured to a portion of a backpack. Upon unfastening the end of the extended portion from the backpack, the extended portion may extend in a wing-like fashion to further expedite evaporation of the moisture.

The extended portion or part thereof may be a color chosen to attract the sun and/or heat from the sun. For example, material of the extended portion may be a dark color, such as black. The area of the extended portion or a portion near the extended portion may have one or more reflective features to reflect sunlight and/or heat onto an extended portion to provide increased evaporation.

The presently described fibrous absorbing material may be useful in wearable accessories, such as backpacks. When wearing a backpack, the wearer may perspire, particularly in areas where the backpack contacts the wearer. For example, a wearer may perspire in the areas of his or her back where the backpack is located. A wearer may perspire on the shoulders and/or chest where the straps of the backpack are located. A wearer may perspire in the waist area where a waist harness is positioned. Any or all of these portions of a backpack may include a fibrous absorbing material to provide cushioning, moisture wicking, moisture absorption, moisture evaporation, or a combination thereof. The fibrous absorbing material of any of these portions of the backpack may include one or more extended portions.

Where a backpack includes a fibrous absorbing material at a back contact portion, the fibrous absorbing material may wick away moisture from the wearer's back. The moisture may then travel across the fibrous absorbing material toward an edge of the back contact portion. An extended portion may be located at or near a side panel, bottom, or top of the backpack, such that moisture is directed away from the surface having or producing moisture to an area of increased air flow and/or exposure to sunlight or heat.

A fibrous absorbing material may be used as part of a protective article. The protective article may have a rigid outer shell or rigid outer portion that provides protection to one or more body parts. Between the body part and the rigid outer shell may be a padding material. The padding material may include a fibrous absorbing material. The fibrous absorbing material may be the padding material. For example, a helmet has a rigid outer shell, with padding material located between the rigid shell and the wearer. Shoulder pads for sports have rigid cups positioned on the wearer's shoulders, with padding material between the wearer and the rigid cups.

A helmet, such as a cycling helmet, may have one or more openings to permit air flow through the helmet. A fibrous absorbing material may be positioned between the wearer's head and the shell of the helmet. An extended portion of the fibrous absorbing material may be located within the openings of the helmet. The extended portion may be secured to an edge of the helmet defining the opening. The extended portion may act so as not to completely block the opening, such that air can still travel through the opening. As air is still permitted to flow through the openings, and as the extended portion provides increased surface area of the fibrous absorbing material to the air flow, the rate of evaporation of the moisture wicked from the wearer's head may be increased at least in the areas of the extended portion. The extended portion may wrap around a portion of the helmet, such as the edge of the helmet. As moisture may tend to travel toward areas of less moisture in the material, as moisture in the extended portions evaporates at an increased rate, moisture may continue to travel to the extended portions, thereby increasing the rate of evaporation of the fibrous absorbing material, even in areas of the body of the fibrous absorbing material (e.g., areas between the surface having or producing moisture and an opposing surface).

An article of footwear, such as a boot or shoe, may include one or more fibrous absorbing materials. An article of footwear may include a vamp. The vamp may cover the foot from the toe to a top edge of the article of footwear or the tongue. The article of footwear may include a quarter. The quarter may cover the rear portion of the foot, such as the heel. The quarter may extend from the heel to the collar. The collar may be the edge where the wearer's foot is inserted. The article of footwear may include a shaft that extends the article of footwear upward on the wearer's leg (e.g., toward or past the ankle and/or toward or past the knee). A fibrous absorbing material may be used in the insole, outsole, vamp, tongue, quarter, collar, shaft, or any combination thereof. An extended portion may extend from the quarter and/or shaft and around the collar of the article of footwear.

Extended portions may extend around an outer edge of another portion of the article, such as a rigid portion of a pad, a collar of an article of footwear, or a back contact portion of a backpack. This may be particularly useful where the article does not have openings within or throughout the material for air flow.

A fibrous absorbing material may be used as part of body armor, such as a tactical vest, bulletproof vest or ballistic vest. A ballistic vest provides protection by absorbing the impact of bullets or projectiles to protect the body; however, these vests are often heavy and provide insulation to the body, causing the body to sweat. A fibrous absorbing material may be used within the body armor at the chest, back, sides, shoulders, or a combination thereof. The fibrous absorbing material may provide padding to the wearer while also being a lighter weight than traditional materials used in body armor or ballistic vests.

The vest may include a ballistic material designed to disperse the energy from a round of ammunition and deform the slug to minimize blunt force trauma. Such ballistic material may be steel plates or composites of ceramic and titanium, or Kevlar. The fibrous absorbing material may be located between the wearer and the ballistic material.

The fibrous absorbing material may have an extended portion that extends beyond the area outside of the ballistic material. This may provide increased wicking of moisture, enhanced evaporation or moisture, or both. This may provide cooling to the wearer, a lighter weight vest, or both.

Guided wicking and evaporation may occur with the presence of one or more additional sources of air, such as air movers like a fan or blower. A small fan or blower may be integrated into or secured to the article (e.g., secured to the fibrous absorbing material) to provide additional air flow and/or enhanced evaporation. This may be useful instead of or in addition to one or more extended portions. An air mover, such as a fan or blower, may be positioned to increase air flow to areas of the fibrous absorbing material that may not be located at or near ambient air flow, for example. A source of air may force the moisture to other areas of the fibrous absorbing material. A source of air may aid in evaporation of the moisture at or near the source of air. The direction of air flow may be generally parallel to the direction of the majority of the fibers. For example, air flow, such as from an air mover, may be directed through the thickness of the material. One or more layers of the fibrous absorbing material may seal the fibrous absorbing material or edges thereof, reducing the amount of air escaping or not permitting air to escape in other directions, thereby further guiding the direction of air flow through the material.

Evaporation of the moisture within a fibrous portion, a fibrous absorbing material, an extended portion, or a combination thereof can be understood based on the amount of moisture sweating into the structure, given specific environmental conditions (e.g., temperature, humidity, air flow). Evaporation can be tested and measured using a modified Gravimetric Absorbency Test System (GATS) method. The GATS method measures the wicking/spreading and evaporation of moisture from a fabric.

In the modified GATS setup, the sample is greater than about 6 mm thick. Water is pumped into the sample (e.g., to simulate sweating). A porous plate is used to introduce liquid into the bottom of the material. The material sits horizontally on top of the porous plate, and water flows vertically up through the holes in the plate and into the material. Water is pumped from a calibrated syringe pump at 30 g/hr for 2 hours, and the water collects under the porous plate and rises vertically through the plate. Based on the holding capacity, hydrophilicity-wicking-wetting characteristics, and openness of the material, water will migrate through the material and will evaporate in a dynamic way. If the material is adequately hydrophilic, has enough holding capacity, and can evaporate quickly enough, water will remain collected within the material and will not overrun or overflow out of the material. If water overflows out of the material, its holding capacity has been exceeded and it is not evaporating fast enough to prevent the overflow.

Evaporation rate is measured as a function of forced water content into the three-dimensional structure given specific environmental conditions using an environmental chamber. Evaporation rate may be important, as this may effect the evaporative (enthalpic) cooling effect while wearing the article.

Results are plotted as mass of water in the sample in grams vs time in minutes. The results plot (mass curve) is a simple convolution of the water inflow rate (30 g/hr) and the evaporation rate. The convolution is a binomial (quadratic equation) that is fit to the data, where the derivative gives the instantaneous mass flow rate. The evaporation rate is the difference between the actual mass flow rate and 30 g/hr. Hence, evaporation rate at the beginning, middle, and/or end of the experiment can be analyzed.

Evaporation rate at different points of the mass curve may be of interest as it relates to the application. For example, an evaporation rate at 25 min to 60 min into the test may simulate a dry headband getting soaked during a jog or a run. For another example, an evaporation rate at 120 minutes into the experiment may simulate a backpack back panel that is soaked from rain or has gotten wet from immersion in a river or creek.

Samples may be tested with and without an extended portion. An extended portion may increase the evaporation rate of the sample by about 20% or more, about 50% or more, about 100% or more, about 150% or more, or about 200% or more,

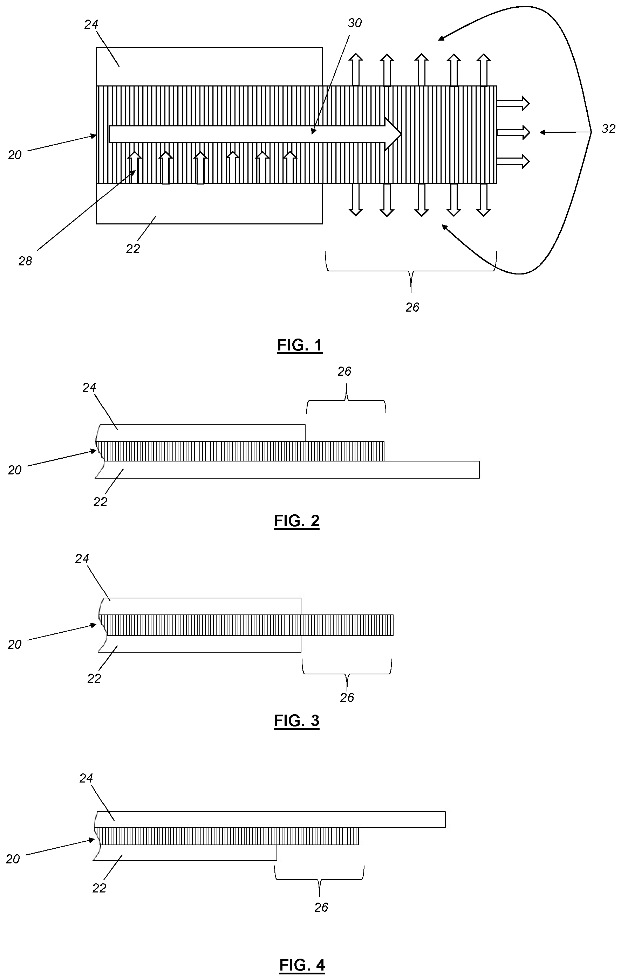

Turning now to the figures, Figure 1 illustrates an exemplary absorption and evaporation mechanism. A fibrous absorbing material 20 is positioned adjacent a surface having or producing moisture 22. An opposing surface 24 is located on the opposing surface of the fibrous absorbing material 20 opposite the surface having or producing moisture 22. The opposing surface may be, for example, an article where the fibrous absorbing material is secured, such as an outer shell (e.g., of a helmet or shell of a protective pad) or another portion of an article such as a backpack.

The surface having or producing moisture 22 produces moisture, which is wicked away from the surface by the fibrous absorbing material 20. Vertical wicking 28 occurs, bringing the moisture into the fibrous absorbing material 20 in a direction generally perpendicular to the surface having or producing moisture 22. Transverse wicking 30 occurs in a direction generally transverse to the vertical wicking direction (or generally parallel to the surface having or producing moisture), bringing the moisture toward an area of increased air flow. The fibrous absorbing material 20 is exposed to greater air flow at an extended portion 26, where the fibrous absorbing material 20 extends beyond the surface having or producing moisture 22, the opposing surface 24, or both. Evaporation 32 of the moisture occurs in multiple directions, particularly where the extended portion 26 is exposed to a source of air or air flow.

Figures 2, 3, and 4 show possible exemplary configurations of a three-dimensional active wicking and evaporation assembly.

In Figure 2, the extended portion 26 extends beyond the opposing surface 24. The surface having or producing moisture 22 extends beyond the opposing surface 24 and the fibrous absorbing material 20.

In Figure 3, the extended portion 26 of the fibrous absorbing material 20 extends beyond both the surface having or producing moisture 22 and the opposing surface 24. While shown as being generally aligned or generally coextensive, it is contemplated that the boundaries of the surface having or producing moisture 22 and the opposing surface 24 are not completely in alignment, though the fibrous absorbing material 20 may extend beyond both, such that the extended portion 26 extends beyond both the surface having or producing moisture 22 and the opposing surface 24.

In Figure 4, the extended portion 26 of the fibrous absorbing material 20 extends beyond the surface having or producing moisture 22. The opposing surface 24 extends beyond the fibrous absorbing material 20.

While Figures 2, 3, and 4 are illustrated for simplicity's sake as having a generally uniform fibrous absorbing material, it is contemplated that there may be variations in the fibrous absorbing material. Variations may include variable density of the material (e.g., with one portion having a higher density than another portion). Variations in density may be through the thickness of the material, across a length of the material, across a width of the material, or a combination thereof. Variations may include directions of fibers (e.g., due to compression, processing techniques, application of heat, use of different fibers, the like, or a combination thereof). It is contemplated that the processing techniques or direction or orientation of the fibers may be tuned or selected based on intended transfer of moisture through the material. For example, fibers may be arranged such that moisture or fluid (e.g., droplets, vapor, or both) moves through the thickness of the material, in a direction generally transverse to the surface having or producing moisture, or both. Other fibers may be oriented to transfer the moisture or fluid in a different direction (e.g., toward an area of increased air flow, such as a fin or tab or extended portion, toward an edge of the fibrous absorbing material, or both). As an example, and not to serve as limiting, the fibrous absorbing material may have a portion that is formed by a vertical lapping, rotary lapping, or air laying process, and another portion (e.g., the extended portion) may be formed by a cross-lapping process. This may provide variations in fiber arrangement or average fiber orientation. These variations may provide additional guidance and control of the direction of the transfer of moisture or vapor. In this example, the moisture or vapor may be drawn away from the surface having or producing moisture (e.g., generally transverse to the surface) and may then be transferred in a direction generally parallel to the surface having or producing moisture, generally along the length or width of the fibrous absorbing material, toward an edge of the fibrous absorbing material (e.g., the extended portion), or a combination thereof.

Figure 5 illustrates a side view, or a view of the thickness or cross-section of an exemplary fibrous absorbing material 20. The fibrous absorbing material 20 includes a fibrous portion 40. The fibrous portion may be a carded and lapped fibrous material. The fibrous portion 40 as shown is in an uncompressed state, though it is contemplated that a final fibrous absorbing material may undergo one or more compression operations or one or more operations that result in a compressed carded and lapped fibrous material. It is contemplated that a final fibrous absorbing material may undergo one or more localized compression operations, such that only portions of the fibrous absorbing material are compressed (e.g., forming one or more air flow channels, forming a compressed edge, such as by heat sealing).

The lapping procedure produces a structure with a series of first loops 42 and generally opposing second loops 44. When fibers 46 forming the fibrous portion 40 are carded, the fibers generally follow the machine direction. Upon lapping, the fibers 46 are seen to follow the generally undulating shape, where the fibers 46 at the first loops 42 and generally opposing second loops 44 may curve, and the fibers between the loops are in a generally vertical orientation or extending in a direction generally perpendicular to the longitudinal axis LA of the material. In Figure 2, the first loops 42 (as well as the second loops 44) run generally perpendicular to the machine direction and/or generally perpendicular to the longitudinal axis LA of the material. The direction of the loops is into the page.

The fibrous absorbing material 20 may include an optional facing material 48 adjacent the first loops 42. The fibrous absorbing material 20 may include an optional facing material 50 adjacent the second loops 44. Either or both facing materials may be omitted. A facing material may be a single layer. A facing material may be two or more layers. One or more of the facing materials may be located adjacent to the surface having or producing moisture 22 (see Fig. 1). One or more of the facing materials may be located adjacent to the opposing surface 24 (see Fig. 1). One or more facing materials may act as a wicking material. One or more facing materials may act to protect the fibrous portion 40. One or more facing materials may provide a comfortable surface for a wearer (e.g., a soft and/or smooth surface against the wearer's skin, hair, clothing, or the like). One or more facing materials may secure the fibrous portion 40 within an article (e.g., by attaching the fibrous absorbing material to another portion of the article). The article may be, for example and not to serve as limiting, wearable items; protective items, such as ballistic vests; sports padding; headwear, such as helmets; footwear; backpacks; the like; or a combination thereof.

In a fibrous absorbing material with facing materials, one facing may be referred to as the A-surface. The A-surface may be the material adapted to be located at or near the wearer (e.g., the wearer's skin), source of moisture, or both. In a fibrous absorbing material with facing materials on opposing sides of the fibrous portion, the material facing away from the user may be referred to as the B-surface. The A-surface may be the facing material 48 and the B-surface may be the facing material 50 of Figure 5, for example.

It is contemplated that the A-surface and the B-surface may have different hydrophilicity from each other. For example, the B-surface material may be more hydrophilic than the A-surface material. Each layer may be more hydrophilic than the one adjacent, starting at the layer adapted to contact the user and/or source of moisture. This may create a pulling and/or driving force such that the moisture travels from the A-surface facing material 48, through the thickness of the fibrous portion 40, and into the B-surface facing material 50. The A-surface facing material 48 may be dry to the touch, thereby enhancing comfort, dryness, cooling, insulation, or a combination thereof, to the wearer.

Figures 6, 7, 8, and 9 are enlarged photos at 3x magnification of a fibrous portion 40 with a facing material 48, adapted to be situated toward the wearer, and an opposing facing material 50 on the opposing surface, sandwiching the fibrous portion. The view of the photo is looking at the cross-direction, or a cross-section of the machine direction to observe the fiber trends. The measurement of thickness of each sample is also provided in the photos, with each horizontal rectangular segment on the ruler indicating a millimeter. The fibrous materials are prepared using polyester staple fibers and bi-component fibers.

Figure 6 shows a fibrous portion 40 having generally vertical laps or generally vertical undulations. Put another way, the segments between the loops are generally vertical, extending from one loop to an opposing loop. The general visible trend of the image, at 3x magnification and as viewed and determined with the naked eye, of the fibers from one surface to another is between 45 degrees and 135 degrees relative to the surface adapted to contact the wearer or source of moisture, such as the surface adjacent the facing material 50. The view shown is a cross-section of the machine direction (i.e., the looking at the cross-direction).

The lines with arrows illustrate an average direction of the laps or undulations through the thickness of the material at that portion. The circles show inflection points 49, where the average direction changes. The angle of the laps or undulations approaching the opposing facing material 50 is measured from the surface to about 25% of the way into the material from the surface, as denoted by the dashed line. As calculated, the angle is about 104 degrees relative to the surface of the facing material 50, which illustrates a generally vertical orientation (e.g., generally vertically oriented fibers) within the meaning of the term as described herein.

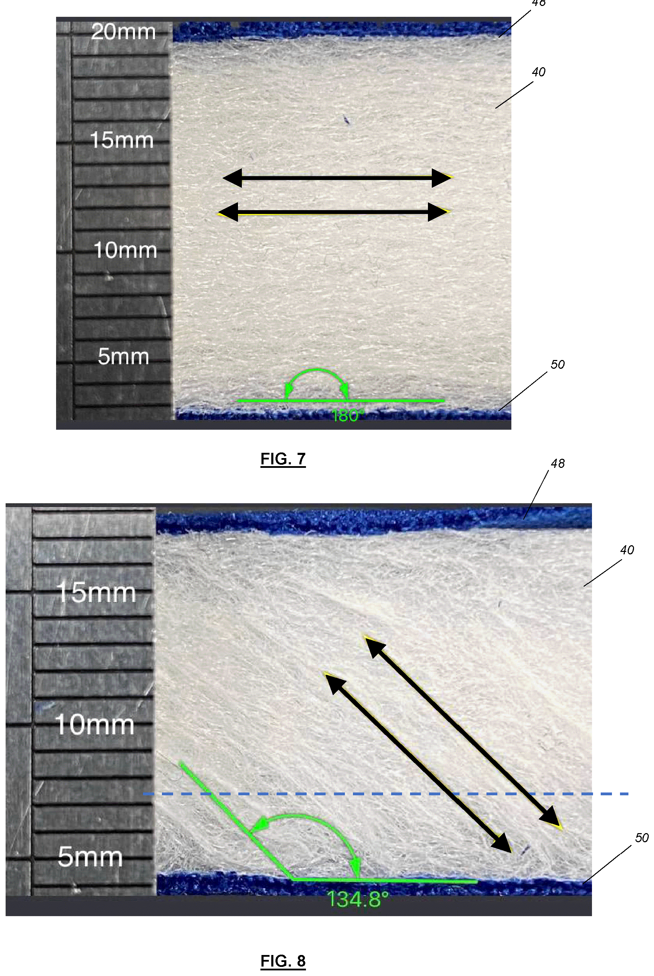

Figure 7 provides a comparative fibrous material having generally horizontal laps or generally horizontal undulations. Put another way, the segments between the loops are generally horizontal, extending from one loop to an opposing loop. The lines with the arrows illustrate an average direction of the laps or undulations when viewing the thickness of the material (i.e., when looking at a cross-section of the machine direction (the cross-direction)). The laps are generally parallel to the facing material 50. The angle of the fibers is 180 degrees.

Figure 8 shows a fibrous portion 40 having laps, undulations, or fiber orientation at an angle from the first contact portion 50. Put another way, the segments between the loops are generally shown at an angle between 90 degrees and 180 degrees, extending from one loop to an opposing loop. The lines with the arrows illustrate an average visible trend of the direction of the laps, undulations, or fibers through the thickness of the material. The angle of the trend of the laps, undulations, or fibers approaching the opposing facing material 50 is measured from the surface to about 25% of the way into the material from the surface, as denoted by the dashed line. As calculated, the average angle of the trend of fibers or laps or undulations is less than 135 degrees relative to the surface of the facing material 50. This may be considered a generally vertical orientation (e.g., generally vertically oriented fibers) within the meaning of the term as described herein.

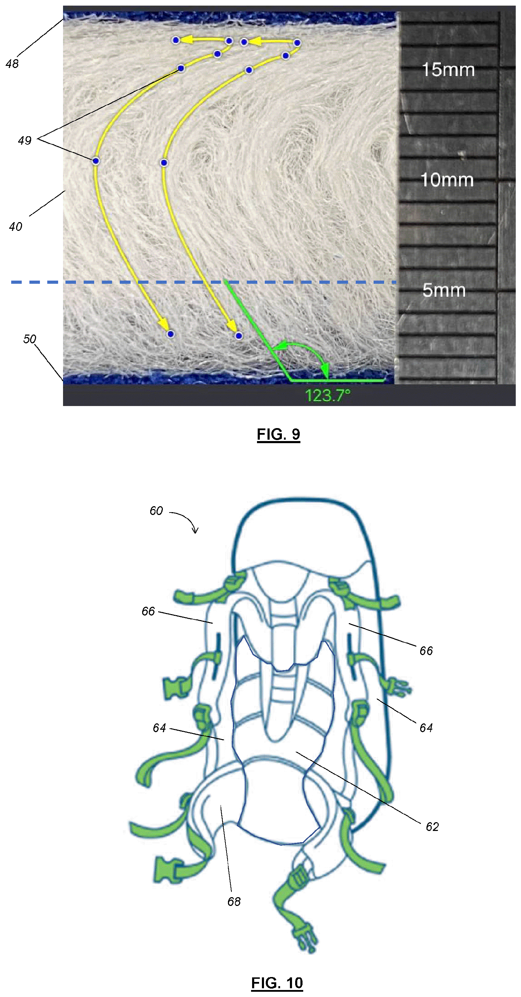

Figure 9 shows a fibrous portion 40 having laps or undulations that are compressed toward the facing material 48. Put another way, the segments between the loops have generally vertical portions and portions closer to horizontal, as the segment extends from one loop to an opposing loop. This is an example of a material having a variable density through the thickness of the material. The lines with arrows illustrate an average direction of the laps, undulations, or the general visible trend of the fibers through the thickness of the material, as seen from a cross-section of the machine direction of the material (i.e., the cross-direction). Inflection points 49 show where the average direction changes. As calculated, the angle of the fibers or laps approaching the opposing facing material 50 is less than 124 degrees relative to the surface of the opposing facing material. The angle of fibers or laps toward the facing material 48 is generally closer to horizontal or generally parallel to the surface of the facing material. Due to the orientation of laps or fibers, the material may have a greater density toward the facing material 48 than the opposing facing material 50. The fibrous portion 40 of Figure 9 may be considered a generally vertical orientation (e.g., generally vertically oriented fibers) within the meaning of the term as described herein.

The fibrous absorbing material as described herein may be employed in various articles, particularly wearable articles. Figure 10 illustrates one such use, where the article is a backpack 60.

The backpack 60 includes a back contact portion 62, which is adapted to contact a wearer's back. The back contact portion 62 may include a fibrous absorbing material 20 (see Fig. 5), as this is an area where cushioning may be desirable and/or an area that may be exposed to a surface having or producing moisture, where the wearer's back has or produces moisture.

The backpack 60 includes side panels 64, which extend from the back contact portion 62. The side panels may define the shape of the backpack. The fibrous absorbing material 20 (see Fig. 5) may extend into or form at least a portion of a side panel 64. This extension may act as an extended portion 26 (see Fig. 1), where the side panel 64 or a portion thereof is exposed to air flow by extending beyond the portion covered by the surface having or producing moisture 22 (e.g., a wearer's back).

The side panels may be at least partially released under certain conditions (e.g., upon detaching a portion of the side panel). Upon release, the side panel may have a wing-like appearance. In such case, the side panel may extend away from the backpack to serve as an extended portion with increased exposure to air flow. The side panel may be re-secured to the backpack when desired.

The backpack 60 includes one or more straps 66 (shown here as two straps, though for a messenger-style bag or cross-body bag, for example, a single strap may be used). At least a portion of a strap 66 may include a fibrous absorbing material 20 (see Fig. 5), as this is an area where cushioning may be desirable and/or an area that may be exposed to a surface having or producing moisture, where the wearer's shoulders or chest may have or produce moisture.

The backpack 60 optionally includes a waist harness 68 that is adapted to be positioned at or around a wearer's waist. The waist harness 68 may include a fibrous absorbing material 20 (see Fig. 5), as this is an area where cushioning may be desirable and/or an area that may be exposed to a surface having or producing moisture.

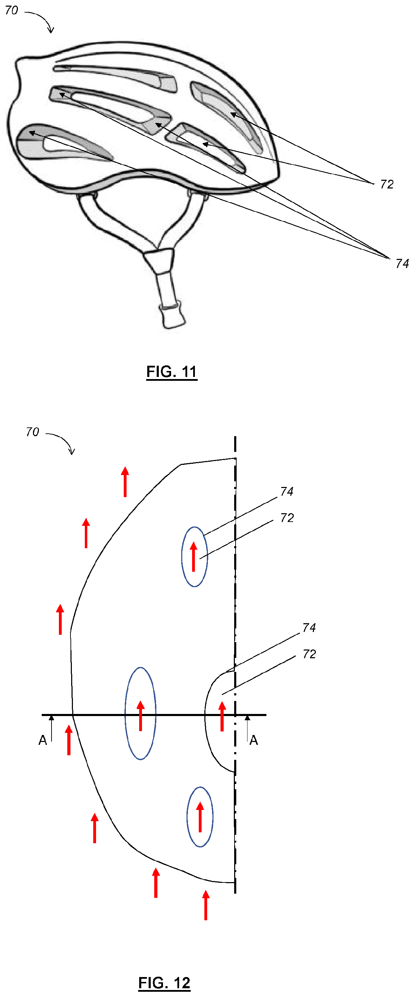

Figure 11 illustrates another wearable article where a fibrous absorbing material may be employed, where the wearable article is a helmet 70, shown as a bike helmet.

The helmet 70 has a plurality of openings 72 defined by edges 74. A fibrous absorbing material 20 may be located at the openings 72 and/or at the edges 74.

Figure 12 is a top view of a partial helmet 70. The helmet 70 includes a plurality of openings 72 defined by edges 74. The arrows indicate air flow. Air flows into the helmet through the openings 72, over the top of the helmet, and around the sides of the helmet.

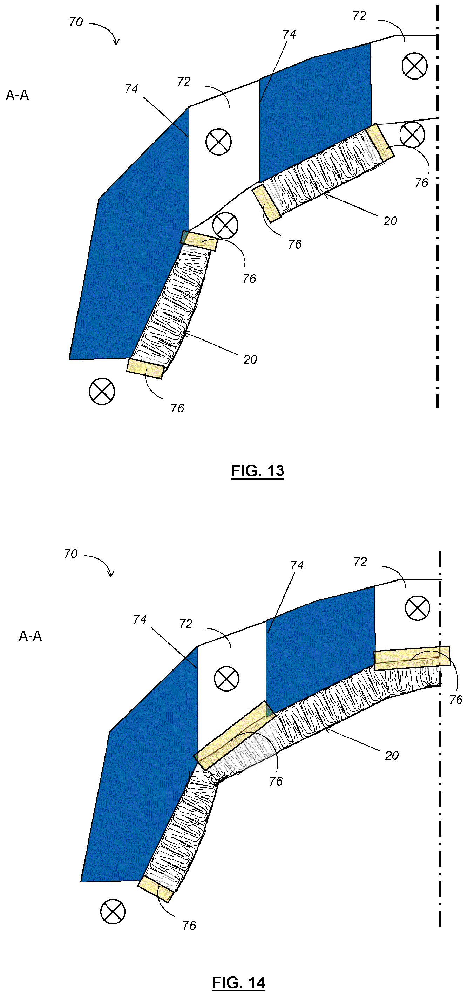

Figures 13, 14, and 15 are exemplary cutaway views taken along A-A of the helmet of Figure 11, illustrating possible positions of a fibrous absorbing material 20 within the helmet 70. The helmet 70 includes openings 72 defined by edges 74. The ⊗ denotes air flow in areas of the openings.

Figure 13 shows two sections of a fibrous absorbing material 20, with the sections secured to the helmet 70 and a gap between the material corresponding with the openings 72 of the helmet. The edges of the fibrous absorbing material 20 at the openings 72 are open surfaces 76 that are in direct contact with air flow. These open surfaces 76 may experience faster evaporation rates than other parts of the fibrous absorbing material 20. However, this configuration provides limited access to open surfaces for drying.

Figure 14 shows a fibrous absorbing material 20 extending across the entire portion of the helmet 70 shown. The fibrous absorbing material 20 extends under the openings 72 in the helmet. Open surfaces 76 are located at the areas of air flow, including the portions below the openings in the helmet. This configuration provides enhanced wicking but may increase thermal insulation.

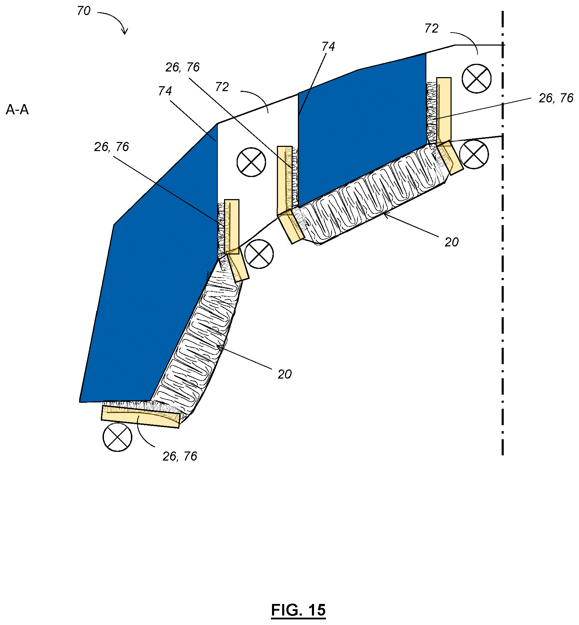

Figure 15 shows two sections of a fibrous absorbing material 20, with the sections secured to the helmet 70 and extended portions 26 extending into the openings 72 of the helmet at the edges 74 defining the openings. The extended portions 26 increase the open surfaces 76 at areas of air flow to provide more surfaces with an increased evaporation rate. The same surface of the fibrous absorbing material 20 is in contact with the wearer as in Figure 9; however, due to the increased open surfaces 76, evaporation may be enhanced as compared to the assembly of Figure 9.

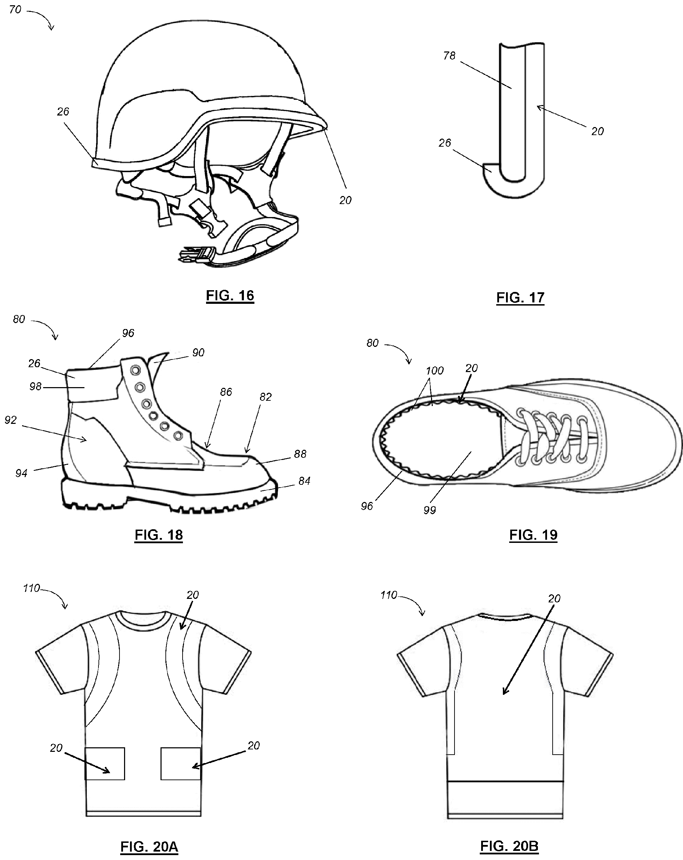

Figure 16 illustrates a helmet 70, shown as a law enforcement or military helmet. An extended portion 26 of a fibrous absorbing material 20 is shown to curve around an edge of the helmet. This extended portion is therefore exposed to greater air flow than if it were located solely within the helmet.

Figure 17 is an exemplary cross-section of an article 78, such as the helmet 70 of Figure 16. The fibrous absorbing material 20 has an extended portion 26 that wraps around an edge of the article 78.

Figure 18 illustrates an exemplary article of footwear 80 shown as a boot. It is contemplated that other articles of footwear may omit certain portions shown in Figure 18. The elements shown are intended to be exemplary. In general, the article of footwear 80 may include an upper 82, the part of the article of footwear that covers the foot, and a sole 84, the part of the article of footwear that is located below the wearer's foot.

The upper 82 of the exemplary article of footwear 80 includes a vamp 86. The vamp covers the foot from a toe 88 to a top edge of the article of footwear or the tongue 90 (if the article of footwear has a tongue). The exemplary article of footwear 80 includes a quarter 92, which covers the rear portion of the foot, such as the heel 94. The quarter 92 extends from the heel 94 to the collar 96 of the article of footwear, where the collar is the edge where the foot of a wearer is inserted to put on the footwear. The article of footwear 80 may include a shaft 98 that extends the article of footwear upward on the wearer's leg (e.g., toward or past the ankle and/or toward or past the knee).

A fibrous absorbing material 20 may be located at any part of the article of footwear 80. An extended portion 26 may wrap around the collar 96 of the article of footwear and extend downwardly at or near the exterior of the article of footwear. As shown, the extended portion 29 wraps around the collar 96 and extends along the shaft 98.

Figure 19 is a top view of an exemplary article of footwear 80 looking down through the collar 96 to an insole 99. Within the interior of the article of footwear 80 is a fibrous absorbing material 20. The fibrous absorbing material 20 is shown to have a plurality of air flow channels 100. The air flow channels allow for heat within the article of footwear to rise out of the article of footwear; permit venting; increase air flow within the article of footwear to provide cooling, evaporation of moisture, or both; or a combination thereof.

The fibrous absorbing material may have an extended portion that wraps around at least a portion of the collar 96.

The frequency and position of the air flow channels may vary, and the frequency shown in Figure 19 may be exaggerated. Air flow channels may be spaced generally evenly in an area. Air flow channels may be located only at certain locations within the article of footwear (e.g., areas where increased air flow and/or venting may be needed). The air flow channels may be created by a gap between the pad material and the wearer. For example, the air flow channels may be created where an area of decreased thickness of the pad does not contact or makes less contact with the foot, ankle, and/or leg within the article of footwear.

Figures 20A and 20B illustrate an exemplary garment 110, shown as a front and rear view of a shirt. While shown as a shirt, other garments are contemplated, including but not limited to jackets, vests, long-sleeved shirts, pants, shorts, tights, undergarments, and the like. Fibrous absorbing material 20 is located at various areas of the garment 110, where sweat, moisture, or vapor may be most likely to accumulate (e.g., based on the activity). Fibrous absorbing material 20 may located in areas where additional padding or cushioning may be desired. As illustrated, the exemplary garment 110 includes the fibrous absorbing material 20 at areas where a backpack would be worn and in contact with the user. While other configurations are contemplated based on the activity (or even based on the backpack), as illustrated in Figure 16A, there is a portion of fibrous absorbing material that extends along the front of the shirt where straps of a backpack would be situated. This may provide additional heat management, moisture management, cushioning, or a combination thereof. There also is a portion that extends along the waist where a waist strap of a backpack could be located. As illustrated in Figure 20B, there is fibrous absorbing material that extends to cover a majority of the back of the wearer where the backpack would be in contact. Portions extend around to the front where the waist strap would be.

The fibrous absorbing material may be integrated into the garment. The fibrous absorbing material may be an insert for the garment. The fibrous absorbing material may attach to the garment (e.g., via adhesive, stitching, hook and loop fastener, or the like).

While the figures illustrate specific applications such as backpacks and helmets, other wearable articles are also contemplated, particularly wearable articles where cushioning, wicking, absorbing, evaporation of moisture, or any combination thereof are desired. For example, sports pads are included within the scope of the present teachings.

### ILLUSTRATIVE EXAMPLES

Samples are prepared for conducting various tests. Each sample has fibrous material sandwiched between facing layers. The facing layers are the same material in each sample and are a permeable wicking fabric. Samples are prepared having different orientations of fibers or different orientations of laps or segments between loops. These orientations are as follows:

Samples having a generally vertical orientation of fibers (e.g., the visible general trend of fibers) or generally vertical orientation of segments between loops (identified in the graphs as "Fully Vertical Pleat"), such as that shown in Figure 6;

Samples having a compressed vertical orientation of fibers (e.g., the visible general trend of fibers) or compressed generally vertical orientation of segments between loops (identified in the graphs as "Compressed Vertical Pleat"), such as that shown in Figure 9;

Samples having a generally horizontal orientation of fibers (e.g., the visible general trend of fibers) or generally horizontal orientation of segments between loops (identified in the graphs as "Horizontal Pleat"), such as that shown in Figure 7.

Each sample type is prepared with a low weight fibrous material (about 400 gsm) and a high weight fibrous material (about 600 gsm). The low weight fibrous material samples have a thickness of about 15 mm to about 16 mm. The high weight fibrous samples have a thickness of about 19 mm to about 20 mm. Each sample has the same bi-component to staple fiber ratio and fiber denier.

### BREATHABILITY

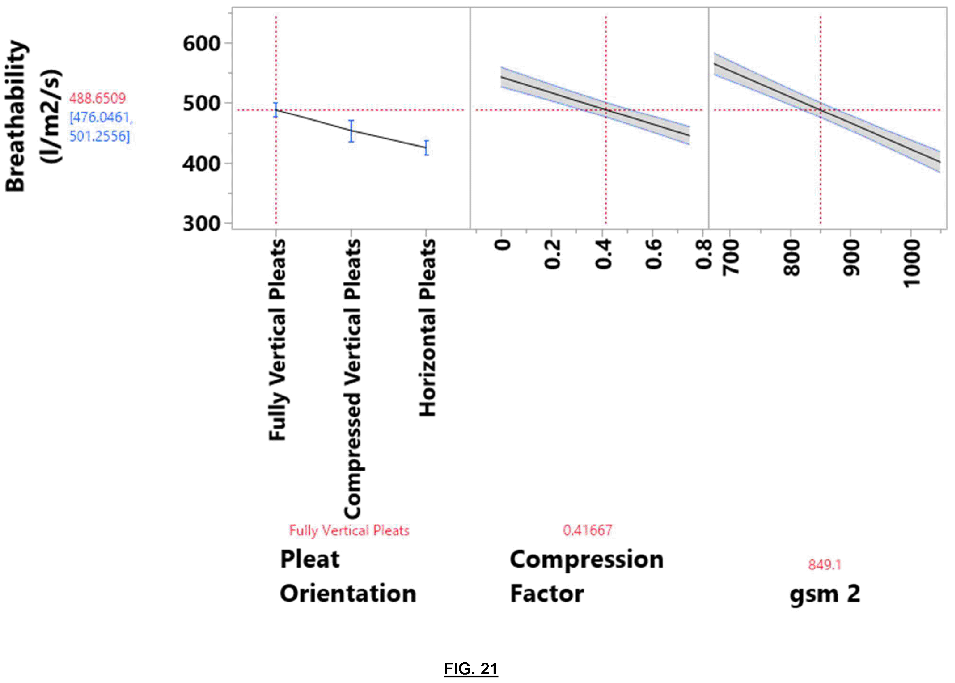

Breathability of the samples is tested using ASTM D737. The compression factor is defined as percent compression of original thickness. Data are collected at compression factors of 0% (no compression), 50%, and 75% for all three sample types (Fully Vertical Pleat, Compressed Vertical Pleat, and Horizontal Pleat). Results of the testing are shown in Figure 21.

As shown, the Fully Vertical Pleats samples have the highest breathability. Horizontal Pleats samples have the lowest breathability of the samples. Compressed Vertical Pleats have a breathability between the Fully Vertical Pleats samples and Horizontal Pleats samples. Breathability increases as the segments between loops, laps, or pleats become more vertical. A reduction in breathability is proportional to the compression factor, regardless of the sample type. Comparing results for the samples at the highest compression level (75%), the originally Fully Vertical Pleats sample has the highest breathability.

Breathability of the samples is higher without the facing material. The type of material for the facing material influences the final breathability of the composite. There is contact resistance between the facing material and the fibrous structure between for air flow.

### WICKING PERFORMANCE

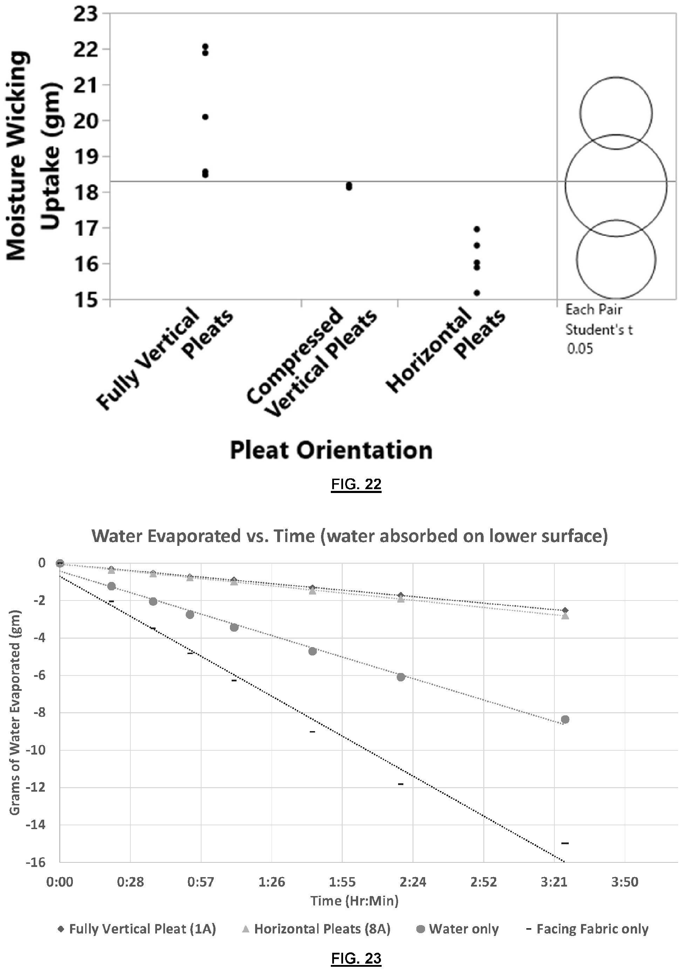

In testing wicking performance, samples (types: Fully Vertical Pleat, Compressed Vertical Pleat, and Horizontal Pleat samples) are 2 inch by 2 inch squares. Five of each of the three sample types are tested. Fibers in the fibrous material of the samples include hydrophilic treated fibers. The permeable wicking fabric sandwiches the fibrous material. 30 mL of colored water is put into a 4 inch diameter petri dish. The samples are placed in the petri dish with water for 15 seconds and the moisture wicking uptake is measured in grams. The results of the testing are shown in Figure 22, where the y-axis is grams of water absorbed into the 2 inch by 2 inch sample with a facing on both sides of the fibrous material. The Student's t-test in Figure 22 shows the results are statistically different between the Fully Vertical Pleat, Compressed Vertical Pleat and Horizontal Pleat samples.

The moisture wicking uptake of the Fully Vertical Pleats samples is shown to be the highest. The moisture wicking uptake of the Horizontal Pleats samples is shown to be the lowest. The moisture wicking uptake of the Compressed Vertical Pleats samples is between the other two sample types. The results indicate that the orientation of the segments between loops, or at least portions thereof, have an influence on the ability of the material to move moisture away from the body.

In observing the direction of moisture travel due to the dye in the water in the petri dish, the moisture is shown to move in the direction of the fibers or webbing.

Data are collected for all three structures having permeable wicking fabric on both sides. The samples are tested with and without hydrophilic treated fibers. The samples without hydrophilic fibers show little to no tendency to absorb moisture into the structure. The results indicate that pleat or fiber orientation in conjunction with hydrophilic fiber treatment has an influence in drawing moisture away from the body.

### DRYING PERFORMANCE

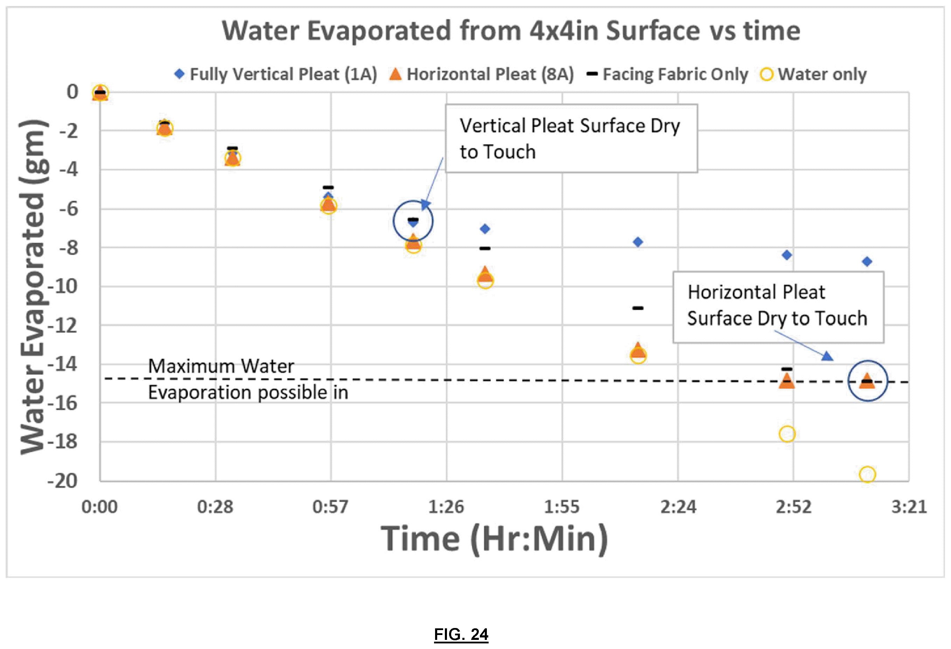

In testing drying performance, samples (types: Fully Vertical Pleat, Compressed Vertical Pleat, and Horizontal Pleat samples) are 4 inch by 4 inch squares. The samples are placed in a 4 inch by 4 inch by 0.75 inch polystyrene tray. A sample holder keeps the edges of the sample from being exposed. 15 grams of moisture are introduced to the sample, and a fan is positioned 2 feet from the surface of the sample. The results of the testing are shown in Figures 23 and 24. Each test run includes two controls at the same time and the same conditions - water only and the facing fabric only.

Figure 23 illustrates results of water absorbed into the bottom of the article, with 15 grams of water applied to the bottom of the material or the side facing the tray and convective air flow directed toward the top of the material or the side facing away from the tray. When water is adsorbed underneath the material, the pleat structure (Fully Vertical Pleat and Horizontal Pleats) had less impact on the evaporation at the interface.

Figure 24 illustrates the results of water applied to the top of the material or the side facing away from the tray. The top of the material is seen to dry faster in the Fully Vertical Pleat sample compared with the Horizontal Pleat sample. Moisture is observed to move in the pleat direction. In the Fully Vertical Pleat sample, the moisture moves toward the opposite side. The top of the material of the Fully Vertical Pleat sample is dry to the touch faster than the Horizontal Pleat sample. The orientation of the pleats has an influence in drawing moisture away from the body and giving the wearer a feeling of dryness, even if the entirety of the structure has not completely dried yet.

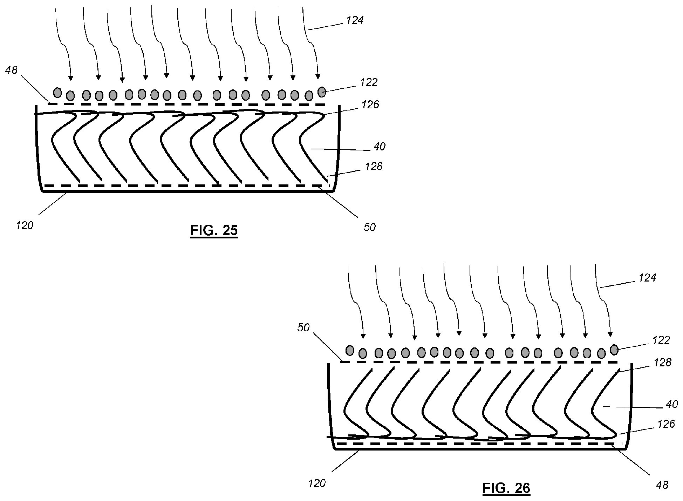

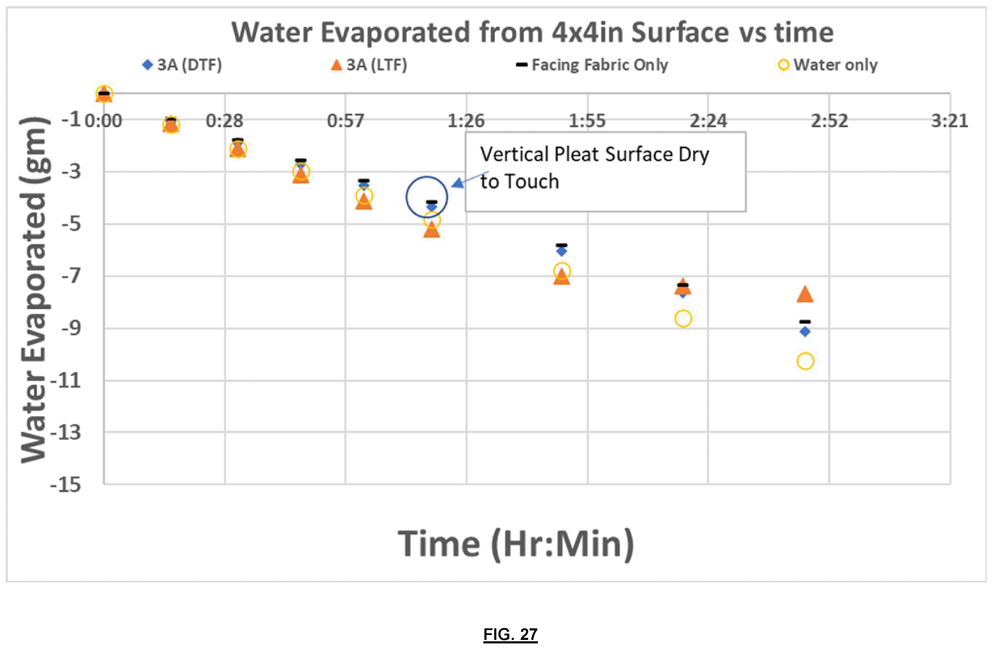

Figure 25 illustrates a Compressed Vertical Pleat Sample in a tray 120. Moisture 122 is introduced to a surface of a facing layer 48, and the opposing facing layer 50 is positioned at or near the base of the tray 120. Convective air flow 124 is applied via fan. The fibrous layer 40 includes a dense portion 126 or compressed portion and a lofted portion 128 or generally vertical portion. The dense portion 126 is positioned toward the convective air flow 124. The lofted portion 128 is positioned toward the base of the tray 120. The results of the drying performance testing of this sample are shown in Figure 27 as the sample with the Dense-side Toward Fan (DTF).

Figure 26 illustrates a Compressed Vertical Pleat Sample in a tray 120. Moisture 122 is introduced to a surface of a facing layer 50, and the opposing facing layer 48 is positioned at or near the base of the tray 120. Convective air flow 124 is applied via fan. The fibrous layer 40 includes a dense portion 126 or compressed portion and a lofted portion 128 or generally vertical portion. The lofted portion 128 is positioned toward the convective air flow 124. The dense portion 126 is positioned toward the base of the tray 120. The results of the drying performance testing of this sample are shown in Figure 27 as the sample with the Lofted-side Toward Fan (LTF).

Figure 27 illustrates the results of water applied to the top of the Compressed Vertical Pleat Samples (or the side facing away from the tray) as illustrated in Figures 25 and 26. The samples are with a Dense-side Toward Fan (DTF) and a Lofted-side Toward Fan (LTF). The surface directly exposed to the convective air flow (e.g., the A-surface) is dry to the touch faster when the lofted portion is positioned toward the fan as compared to when the dense portion is toward the fan.

This supports that the orientation of pleats and/or trends of fibers impact the perceived feeling of dryness for a wearer. Pleat orientation at the surface of moisture helps drive the moisture into the structure, leaving the surface dry to the touch even if the entirety of the material has not yet dried. A generally vertical pleat structure at the surface is dry to the touch faster than a generally horizontal pleat structure.

### DRYING PERFORMANCE - VERTICAL

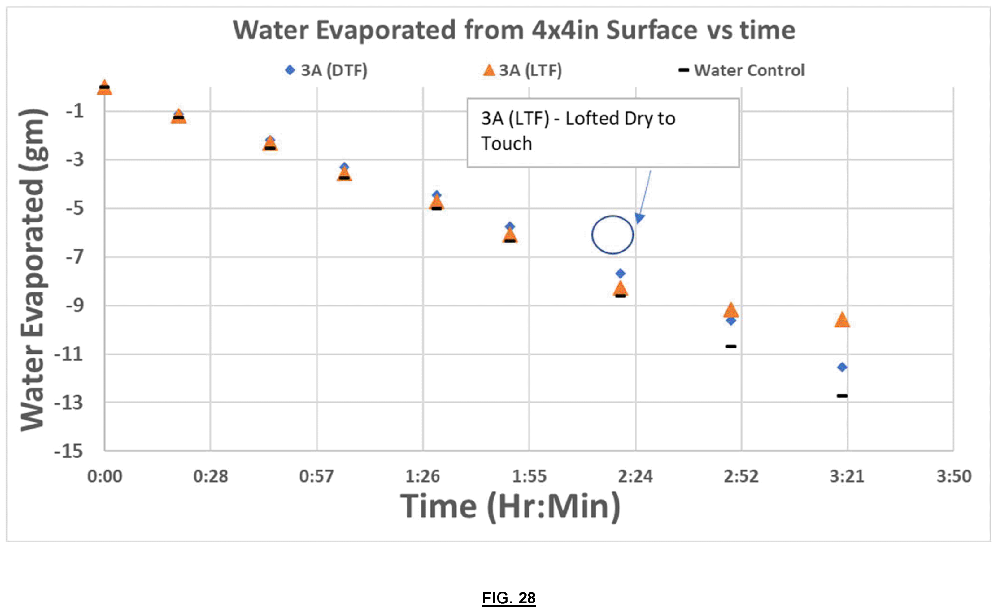

In testing drying performance of a vertical sample, samples (types: Compressed Vertical Pleat with Dense-side Toward Fan (DTF) and Lofted-side Toward Fan (LTF) samples) are 4 inch by 4 inch squares. The samples are placed in a 4 inch by 4 inch by 0.75 inch polystyrene tray. A sample holder keeps the edges of the sample from being exposed. 15 grams of moisture are introduced to the sample, and a fan is positioned 2 feet from the surface of the sample. The results of the testing are shown in Figure 28. Each test run includes one control at the same time and the same conditions - water only. Samples tested are similar to those shown in Figures 25 and 26, except the samples are rotated 90 degrees so they are vertical, rather than horizontal.

Figure 28 illustrates the results of water applied to the exposed surface of the Compressed Vertical Pleat samples (or the side facing away from the tray). The samples are with a Dense-side Toward Fan (DTF) and a Lofted-side Toward Fan (LTF). The surface directly exposed to the convective air flow (e.g., the A-surface) is dry to the touch faster when the lofted portion is positioned toward the fan as compared to when the dense portion is toward the fan.

This supports that the orientation of pleats and/or trends of fibers impact the perceived feeling of dryness for a wearer, even if the material is held in a vertical orientation or a non-horizontal orientation. Pleat orientation at the surface where moisture is applied helps drive the moisture into the structure, leaving the surface dry to the touch even if the entirety of the material has not yet dried. A generally vertical pleat structure at the surface where moisture is applied is dry to the touch faster than a generally horizontal pleat structure, even when the material is held in a non-horizontal orientation (e.g., a suspended generally vertical orientation).

In comparing the results in Figure 27 and Figure 28, the surface is dry to the touch quicker when the sample is kept horizontal as opposed to being held vertically. Gravity may impact the transfer of moisture through the material. Where gravity is pulling the moisture in generally the same direction as the pleat orientation (e.g., so moisture can travel along the fibers in generally the same direction as gravitational forces), this may create faster moisture transfer, such that the surface of the material is dry to the touch faster.

The amount of moisture used in the testing is insufficient to create dripping or pooling of moisture at the bottom of the tray when kept horizontal or side of the tray when held vertically. However, dripping of moisture may be possible if additional moisture is applied.

### COMPRESSION FORCE DEFLECTION

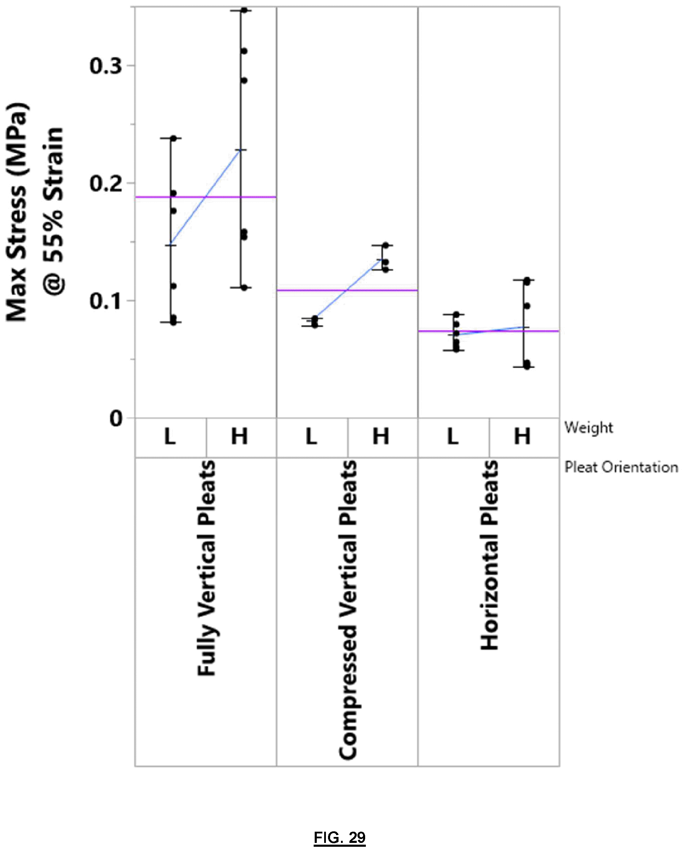

Compression force deflection of the samples are tested in accordance with ASTM D3574 Test C. Results of the testing are shown in Figure 29. L indicates the low weight fibrous material (about 400 gsm) and H indicates the high weight fibrous material (about 600 gsm). Ten samples are tested for the three sample types (types: Fully Vertical Pleat, Compressed Vertical Pleat, and Horizontal Pleat samples), with three repeats each.

The results show the force required to compress the structure is greatest for the Fully Vertical Pleats samples and least for the Horizontal Pleats samples, with Compressed Vertical Pleats samples therebetween.

Any of the materials described herein may be combined with other materials described herein (e.g., in the same layer or in different layers of the layered material). The layers may be formed from different materials. Some layers, or all of the layers, may be formed from the same materials, or may include common materials or fibers. The type of materials forming the layers, order of the layers, number of layers, positioning of layers, thickness of layers, or a combination thereof, may be chosen based on the desired properties of each material (e.g., wicking properties, cooling properties, insulative properties, and the like), the desired air flow resistive properties of the material as a whole, the desired weight, density and/or thickness of the material, the desired flexibility of the material (or locations of controlled flexibility), or a combination thereof. The layers may be selected to provide varying orientations of fibers.

In general, and applicable to all embodiments, what is seen is an improved structure based upon multiple folds, undulations, pleats, laps, or the like from a lapping process or some other process that would result in an accordion-like structure. The accordion-like structure may be compressed, impacting the shape of the folds, undulations, pleats, laps, or the like during processing steps.

In general, and applicable to all embodiments, the multiple folds, undulations, pleats, laps, or the like may have an angle that has a generally vertical orientation relative to the longitudinal axis of the material, a surface having or producing moisture, a surface of the material adapted to contact a surface having or producing moisture, a facing material, or a combination thereof. The angle may be about 45 degrees or greater, about 60 degrees or greater, about 75 degrees or greater. The angle may be about 135 degrees or less, about 120 degrees or less, or about 105 degrees or less.

In general, and applicable to all embodiments, one of the characteristics of the teachings may be the inclusion of periodically repeating segments. The material may have a length, a width, and a thickness. Repeating segments may extend in the direction of the length, the width or both.

In general, and applicable to all embodiments, the ratio of the length, width, or both to the thickness may be about 2:1 or greater, about 5:1 or greater, about 10:1 or greater, about 50:1 or greater, or about 100:1 or greater.

Parts by weight as used herein refers to 100 parts by weight of the composition specifically referred to. Any numerical values recited in the above application include all values from the lower value to the upper value in increments of one unit provided that there is a separation of at least 2 units between any lower value and any higher value. As an example, if it is stated that the amount of a component or a value of a process variable such as, for example, temperature, pressure, time and the like is, for example, from 1 to 90, preferably from 20 to 80, more preferably from 30 to 70, it is intended that values such as 15 to 85, 22 to 68, 43 to 51, 30 to 32, etc. are expressly enumerated in this specification. For values which are less than one, one unit is considered to be 0.0001, 0.001, 0.01, or 0.1 as appropriate. These are only examples of what is specifically intended and all possible combinations of numerical values between the lowest value, and the highest value enumerated are to be expressly stated in this application in a similar manner. Unless otherwise stated, all ranges include both endpoints and all numbers between the endpoints. The use of "about" or "approximately" in connection with a range applies to both ends of the range. Thus, "about 20 to 30" is intended to cover "about 20 to about 30", inclusive of at least the specified endpoints. The term "consisting essentially of" to describe a combination shall include the elements, ingredients, components or steps identified, and such other elements ingredients, components or steps that do not materially affect the basic and novel characteristics of the combination. The use of the terms "comprising" or "including" to describe combinations of elements, ingredients, components or steps herein also contemplates embodiments that consist essentially of the elements, ingredients, components or steps. Plural elements, ingredients, components or steps can be provided by a single integrated element, ingredient, component or step. Alternatively, a single integrated element, ingredient, component or step might be divided into separate plural elements, ingredients, components or steps. The disclosure of "a" or "one" to describe an element, ingredient, component or step is not intended to foreclose additional elements, ingredients, components or steps.

**Element List**

| | |
|---|---|
| 20 | Fibrous absorbing material |
| 22 | Surface having or producing moisture |
| 24 | Opposing surface |
| 26 | Extended portion |
| 28 | Vertical wicking |
| 30 | Transverse wicking |
| 32 | Evaporation |
| 40 | Fibrous portion |
| 42 | First loops |
| 44 | Generally opposing second loops |
| 46 | Fibers |
| 48 | Facing material adjacent the first loops |
| 49 | Inflection point |
| 50 | Facing material adjacent the second loops |
| 60 | Backpack |
| 62 | Back contact portion |
| 64 | Side panel |
| 66 | Strap |
| 68 | Waist harness |
| 70 | Helmet |
| 72 | Openings of helmet |
| 74 | Edge |
| 76 | Open surface |
| 78 | Article |
| 80 | Article of footwear |
| 82 | Upper |
| 84 | Sole |
| 86 | Vamp |
| 88 | Toe |
| 90 | Tongue |
| 92 | Quarter |
| 94 | Heel |
| 96 | Collar |
| 98 | Shaft |
| 99 | Insole |
| 100 | Air flow channels |
| 110 | Garment |
| 120 | Tray |
| 122 | Moisture |
| 124 | Convective air flow |
| 126 | Dense portion |
| 128 | Lofted portion |

## Claims

1. An article comprising:
a fibrous absorbing material comprising:
a) one or more optional permeable facing layers;
b) a body of the fibrous absorbing material, wherein the body comprises a fibrous lofted nonwoven material;
wherein at least a portion of fibers of the fibrous lofted nonwoven material have a generally vertical orientation relative to the surface having or producing moisture, wherein the fibers having a generally vertical orientation have a general visible trend preferably forming an angle of about 45 degrees to about 135 degrees; wherein the article is capable of absorbing and/or transferring moisture, is permeable, and is resilient;
wherein the fibrous absorbing material is adapted to be situated adjacent to a surface having or producing moisture and adapted to be located between the surface having or producing moisture and an opposing surface;
wherein the surfacing having or producing moisture is skin and/or hair of a body or a garment wetted with moisture;
wherein the opposing surface is a portion of a wearable article;
wherein the wearable article is a helmet.

2. The article of claim 1, wherein the body of fibrous absorbing material has one or more compressed portions where the fibers have a generally non-vertical orientation and one or more lofted portions where the fibers have a generally vertical orientation.

3. The article of claim 2, wherein the compressed portions are more dense than the lofted portions.

4. The article of any of the preceding claims, wherein the fibrous absorbing material includes hydrophilic fibers.

5. The article of any of the preceding claims, wherein fluid (e.g., air, vapor) is exchanged within the article by expelling the fluid from the article upon compression and drawing in new fluid (e.g., air, vapor) upon recovery.

6. The article of any of the preceding claims, wherein the fibrous absorbing material has an extended portion that increases open surfaces of the fibrous absorbing material to air flow to provide enhanced evaporation and/or dryness to the touch at the surface to the fibrous absorbing material.

7. The article of the preceding claim, wherein the extended portion extends into an opening of the helmet at an edge defining the opening; extends around an edge of the helmet; or both.

8. The article of any of the preceding claims, wherein the lofted nonwoven material is a carded and lapped material, and optionally a vertically lapped or rotary lapped material.

9. The article of any of claims 1 to 7, wherein the lofted nonwoven material is or includes an air laid material.

10. The article of any of the preceding claims, wherein the article includes one or more moisture wicking facing materials, and optionally wherein at least one of the moisture wicking facing materials is adapted to contact the surface having or producing moisture.

11. The article of any of the preceding claims, wherein the lofted nonwoven material is sandwiched between two moisture wicking materials.

12. The article of any of the preceding claims, wherein the fibrous absorbing material wicks moisture away from the surface having or producing moisture in a generally vertical direction (e.g., generally transverse to the surface having or producing moisture), in a generally transverse direction toward an extended portion, or both.

13. The article of any of the preceding claims, wherein the fibrous lofted nonwoven material has a weight of about 200 g/m² to about 600 g/m².

14. The article of any of the preceding claims, wherein the fibrous lofted nonwoven material has a permeability at 100 Pa of about 600 liters per square meter per second (L/m²/s) or greater, about 1500 L/m²/s or less, or both, or any value therebetween.

15. The article of any of the preceding claims, wherein the article returns to its original uncompressed state when a force is removed within a predetermined amount of time (e.g., 60 seconds or less, 30 seconds or less, 10 seconds or less, 5 seconds or less).
